(19) Europäisches Patentamt
European Patent Office
Office européen des brevets

(11) **EP 0 844 380 B1**

(12) **EUROPEAN PATENT SPECIFICATION**

(45) Date of publication and mention
of the grant of the patent:
**05.03.2003 Bulletin 2003/10**

(51) Int Cl.⁷: **F02D 41/14**, F02D 41/40

(21) Application number: **97120579.4**

(22) Date of filing: **24.11.1997**

(54) **Exhaust emission control system and method of internal combustion engine**

Abgasemissionssteuerungssystem und Verfahren für Verbrennungsmotoren

Système et méthode de commande de l'émission des gaz, d'échappement pour moteurs à combustion interne

(84) Designated Contracting States:
**DE FR GB**

(30) Priority: **22.11.1996 JP 31168696**
**17.03.1997 JP 6256197**
**09.10.1997 JP 27676997**

(43) Date of publication of application:
**27.05.1998 Bulletin 1998/22**

(73) Proprietor: **DENSO CORPORATION**
**Kariya-City Aichi-Pref. 448 (JP)**

(72) Inventors:
• **Nakamura, Kanehito**
**Kariya-city, Aichi-pref. 448 (JP)**
• **Umehara, Akira**
**Kariya-city, Aichi-pref. 448 (JP)**
• **Takemoto, Eiji**
**Kariya-city, Aichi-pref. 448 (JP)**
• **Kuboshima, Tsukasa**
**Kariya-city, Aichi-pref. 448 (JP)**
• **Katsuro, Hajime**
**Kariya-city, Aichi-pref. 448 (JP)**

(74) Representative:
**Winter, Brandl, Fürniss, Hübner, Röss, Kaiser,**
**Polte Partnerschaft**
**Patent- und Rechtsanwaltskanzlei**
**Alois-Steinecker-Strasse 22**
**85354 Freising (DE)**

(56) References cited:
**EP-A- 0 621 400          GB-A- 2 280 222**
**GB-A- 2 307 311          US-A- 3 945 204**

• **PATENT ABSTRACTS OF JAPAN vol. 096, no. 008, 30 August 1996 (1996-08-30) & JP 08 100739 A (ISUZU MOTORS LTD), 16 April 1996 (1996-04-16)**
• **PATENT ABSTRACTS OF JAPAN vol. 017, no. 558 (M-1493), 7 October 1993 (1993-10-07) & JP 05 156993 A (HINO MOTORS LTD), 22 June 1993 (1993-06-22)**
• **AMSTRUTZ A ET AL: "EGO SENSOR BASED ROBUST OUTPUT CONTROL OF EGR IN DIESEL ENGINES" IEEE TRANSACTIONS ON CONTROL SYSTEMS TECHNOLOGY, vol. 3, no. 1, 1 March 1995 (1995-03-01), pages 39-48, XP000508609 ISSN: 1063-6536**

**Description**

CROSS-REFERENCE TO RELATED APPLICATION

This application is related to Japanese Patent Application Nos. Hei 8-311686, 9-62561 and 9-276769.

BACKGROUND OF THE INVENTION

1. Field of the Invention

The present invention relates to an exhaust emission control system and method of an internal combustion engine for reducing and purifying nitrogen oxides ($NO_x$) within exhaust gas emitted from the internal combustion engine by means of a catalyst.

2. Description of Related Art

There have been proposed technologies for reducing and purifying $NO_x$ by providing a $NO_x$ catalyst within an exhaust pipe and by supplying hydrocarbon (fuel) to the $NO_x$ catalyst as a reducer in order to purify $NO_x$ within the exhaust gas emitted from an internal combustion engine such as a diesel engine in which fuel is burned under excessive oxygen. As one example thereof, a technology described in Japanese Unexamined Patent Publication No. Hei 5-156993 is arranged such that a main injection command for generating engine output is given to a fuel injection valve of each cylinder of the internal combustion engine to cause main injection and a post-injection command is given in the expansion stroke after the main injection to inject fuel which is 0.3 to 3 % of the amount of fuel in the main injection from the fuel injection valve to supply unburned fuel (hydrocarbon) to the $NO_x$ catalyst as the reducer during the post-injection.

In EP-A 0 621 400 an injection engine is described comprising a special means for post-treatment of exhaust gas to reduce the oxygen oxides. A catalyst for promoting the nitrogen oxides composition is used. Main injection and post injection is used to control $NO_x$.

Aiming at improving the rate of purification of $NO_x$ further, the inventors have studied a technology for adequately controlling the concentration of hydrocarbon and the concentration of $NO_x$ near the $NO_x$ catalyst by detecting the concentration of oxygen within the exhaust gas by an oxygen sensor and by correcting the control variables of the internal combustion engine (e.g., either an EGR gas flow rate, a fuel injection amount, an intake air amount or the like).

However, because the oxygen sensor is also heated up to high temperature by a heater built in during the operation, the post-injected unburned hydrocarbon is burned at the oxygen sensor and thereby the concentration of oxygen is detected to be low and the accuracy for controlling the internal combustion engine drops.

Because many of the diesel engines have an EGR (exhaust gas recirculating system) to purify $NO_x$ in general, the inventors have considered combining and using the EGR and the above-mentioned $NO_x$ catalyst together, aiming at further improving the rate of purification of $NO_x$. In this case, for example, as disclosed in Japanese Unexamined Patent Publication No. Sho 63-223359 (regarding gasoline engine technology), it is conceivable to detect the concentration of oxygen within exhaust gas using the oxygen sensor and to control the EGR flow rate so that the detected concentration of oxygen coincides with the target concentration of oxygen.

However, because the detected value of the oxygen sensor is lower than the actual concentration of oxygen of the EGR gas and that the post-injected unburned hydrocarbon is burned at the oxygen sensor and the concentration of oxygen drops as described above, the EGR gas flow rate is corrected decrementally to increase an amount of oxygen (intake air amount) to be supplied to the internal combustion engine when the post-injection is executed, thus aggravating the accuracy of control of the EGR and increasing the amount of $NO_x$ emitted from the internal combustion engine. Still more, because part of the exhaust gas containing hydrocarbon supplied in the post-injection is returned to the induction system by the EGR, the hydrocarbon to be supplied to the $NO_x$ catalyst decreases and the rate of purification of $NO_x$ exerted by the $NO_x$ catalyst drops.

Beside this, while the inventors have considered a method of adequately controlling the concentration of hydrocarbon and the concentration of $NO_x$ near the $NO_x$ catalyst by correcting the amount of injected fuel, an intake air amount or the like, for example, based on the concentration of oxygen within exhaust gas detected by the oxygen sensor also in an exhaust gas purification system for purifying $NO_x$ just by the $NO_x$ catalyst, not combining with the EGR, the rate of purification of $NO_x$ cannot be improved as expected unless the problem that the detection accuracy of the oxygen sensor supplied by the post-injection drops is also solved in this case.

This problem may be generalized such that when the post-injection is executed to enhance the rate of purification of the catalyst for reducing and purifying nitrogen oxides within the exhaust gas in the exhaust gas control system having a controller for controlling the system including the internal combustion engine to enhance the rate of purification of the catalyst by an output value of a sensor for detecting the concentration of specific component within the exhaust gas, the output value of the sensor changes and the rate of purification of the catalyst drops as a result.

SUMMARY OF THE INVENTION

The present invention has been devised in view of the above problems of the prior art and a first object thereof is to obtain an exhaust emission control system and method of an internal combustion engine which allows the rate of purification of the catalyst to be prevented from dropping even if the post-injection is executed.

A second object is to obtain an exhaust emission control system and method of an internal combustion system which allows the concentration of oxygen within exhaust gas to be accurately detected by an oxygen sensor and the rate of purification of $NO_x$ to be improved even if the post-injection is executed.

A third object is to obtain an exhaust emission control system of an internal combustion engine which allows the rate of purification of the catalyst to be prevented from dropping by detecting the concentration of a specific component within the exhaust gas in a state when no post-injection is substantially executed by estimation of the position where the sensor for detecting the concentration is attached.

A fourth object is to obtain an exhaust emission control system of an internal combustion engine which allows the rate of purification of the catalyst to be prevented from dropping by estimation of the position where the EGR is mounted.

A fifth object is to obtain an exhaust emission control system and method of an internal combustion engine which allows the rate of purification of the catalyst to be suppressed from dropping by detecting the concentration of oxygen in the state in which no post-injection is executed by estimating the concentration of hydrocarbon within the exhaust gas supplied by the post-injection.

Generally, the fuel injection valve is designed to operate accurately within a control range of the main injection fuel amount and is not good intrinsically at controlling such a small amount of fuel of 0.3 to 3 % of the main injection fuel amount such as that injected during post-injection. Accordingly, the post-injection in which such a small amount of fuel of 0.3 to 3 % of the fuel amount of main injection is apt to fluctuate by being influenced by the variation, the elapsed change and the fluctuation of injection pressure of the fuel injection valve, so that the actual post-injection amount deviates from a commanded value and fluctuates and the optimum amount of hydrocarbon cannot be supplied to the catalyst. As a result, when the excessive amount of hydrocarbon is supplied to the catalyst, the catalyst cannot consume all the unburned hydrocarbon and the hydrocarbon is emitted to the air. On the other hand, when the supply of the hydrocarbon is not sufficient, the rate of purification of $NO_x$ of the catalyst drops, thus increasing the emission of $NO_x$.

The present invention has been devised in view of such circumstances and an object thereof is to provide an exhaust emission control system of an internal combustion engine which allows the rate of purification of $NO_x$ to be improved and the emission of the unburned hydrocarbon to be prevented by adequately correcting the post-injection amount such that it is not influenced by the variation, the elapsed change and the fluctuation of injection pressure of the fuel injection valve even when they exist.

Other objects and features of the present invention will appear in the course of the description thereof, which follows.

BRIEF DESCRIPTION OF THE DRAWINGS

Additional objects and advantages of the present invention will be more readily apparent from the following detailed description of preferred embodiments thereof when taken together with the accompanying drawings in which:

FIG. 1 is a structural drawing of the entire engine control system according to a first preferred embodiment of the present invention;

FIG. 2 is a flowchart showing a flow of processing in the engine control system in the first embodiment;

FIGS. 3A - 3D are graphs showing fuel injection waveforms of a fuel injection valve of each cylinder in the first embodiment;

FIG. 4 is a graph showing a waveform of an output signal of an oxygen sensor in the first embodiment;

FIG. 5 is a flowchart showing a flow of processing of an engine control program used in a second preferred embodiment of the present invention;

FIGS. 6A - 6D are graphs showing fuel injection waveforms of a fuel injection valve of each cylinder in the second embodiment;

FIG. 7 is a graph showing a waveform of an output signal of an oxygen sensor in the second embodiment;

FIG. 8 is a structural drawing of the whole engine control system according to a third preferred embodiment of the present invention;

FIGS. 9A - 9D are graphs showing fuel injection waveforms of a fuel injection valve of each cylinder in the third embodiment;

FIG. 10 is a bar graph showing a rate of recirculation of hydrocarbon to the intake side in each cylinder in the third embodiment;

FIG. 11 is a structural drawing of the whole engine control system showing a fourth preferred embodiment of the present invention;

FIG. 12 is a structural drawing of the whole engine control system according to a fifth preferred embodiment of the present invention;

FIG. 13 is a structural drawing of the whole engine control system according to a sixth preferred embodiment of the present invention;

FIGS. 14A and 14B are a flowchart showing the flow of processing of injection control in the sixth embodiment;

FIGS. 15A - 15E are graphs showing fuel injection waveforms of a fuel injection valve of each cylinder and output waveforms of an oxygen sensor during steady drive in the sixth embodiment;

FIGS. 16A and 16B are a flowchart showing the flow of processing of injection control in a seventh preferred embodiment of the present invention;

FIG. 17A - 17E are graphs showing fuel injection waveforms of a fuel injection valve of each cylinder and output waveforms of an oxygen sensor during steady drive in the seventh embodiment;

FIGS. 18A and 18B are a flowchart showing a flow of processing of injection control in an eighth preferred embodiment of the present invention;

FIGS. 19A - 19E are graphs showing fuel injection waveforms of a fuel injection valve of each cylinder and output waveforms of an oxygen sensor during steady drive in the eighth embodiment;

FIGS. 20A and 20B are a flowchart showing a flow of processes of an injection control program in a ninth preferred embodiment which is not of the present invention;

FIGS. 21A - 21E is a time chart showing fuel injection waveforms of a fuel injection valve of each cylinder and output waveforms of an oxygen sensor during steady drive in the ninth embodiment.

## DETAILED DESCRIPTION OF THE PRESENTLY PREFERRED EXEMPLARY EMBODIMENTS

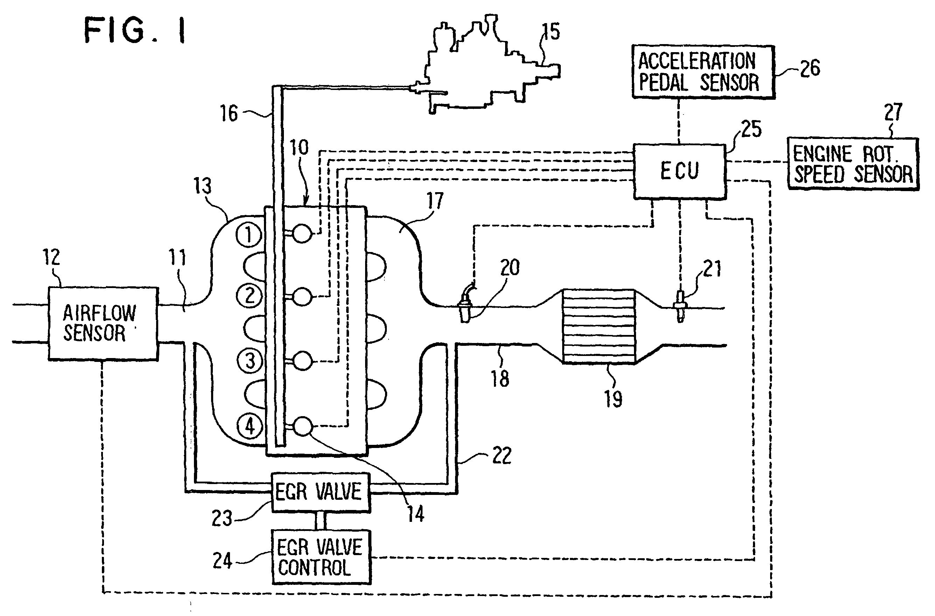

A first preferred embodiment in which the present invention is applied to a four-cylinder diesel engine will be explained below based on FIGS. 1 through 4.

First, the structure of the entire engine control system will be explained based on FIG. 1. An air flow sensor 12 for detecting an intake air amount is in an intake pipe 11 of a diesel engine 10, i.e., an internal combustion engine, and intake air which passes through the air flow sensor 12 is taken into each cylinder of the diesel engine 10 via an intake manifold 13. An electromagnetic fuel injection valve 14 is attached to each cylinder of the diesel engine 10 and fuel is supplied at high pressure to the fuel injection valve 14 from a high pressure fuel pump 15 via a fuel pipe 16.

Exhaust gas emitted from each cylinder of the diesel engine 10 is discharged to a discharge pipe 18 via an exhaust manifold 17 (exhaust passage) and a catalyst for reducing and purifying $NO_x$ in the exhaust gas, i.e., $NO_x$ catalyst 19, is in the exhaust pipe 18. An oxygen sensor 20 for detecting the concentration of oxygen within the exhaust gas is on the upstream side of the $NO_x$ catalyst 19, and an exhaust gas temperature sensor 21 for detecting exhaust gas temperature is on the downstream side of the $NO_x$ catalyst 19.

An EGR pipe 22 executing an exhaust gas recirculating passage for recirculating part of the exhaust gas to the intake pipe 11 is connected between the exhaust pipe 18 and the intake pipe 11 and an EGR valve 23 is in the EGR pipe 22. The aperture of the EGR valve 23 is controlled by an EGR controller 24 and the EGR gas flow rate passing through the EGR pipe 22 is controlled through the control of the aperture.

The fuel injection valve 14 of each cylinder and the EGR control valve 24 are controlled by an engine electronic control circuit (hereinafter denoted as "ECU") 25 while the diesel engine 10 is in operation. The ECU 25 detects the operational state of the diesel engine 10 based on signals read from the air flow sensor 12, an accelerator pedal sensor 26 and an engine speed sensor 27 (all of these correspond to operational state detecting means) and determines whether or not the temperature of the $NO_x$ catalyst 19 is within a predetermined activated temperature range based on an output signal of the exhaust gas temperature sensor 21.

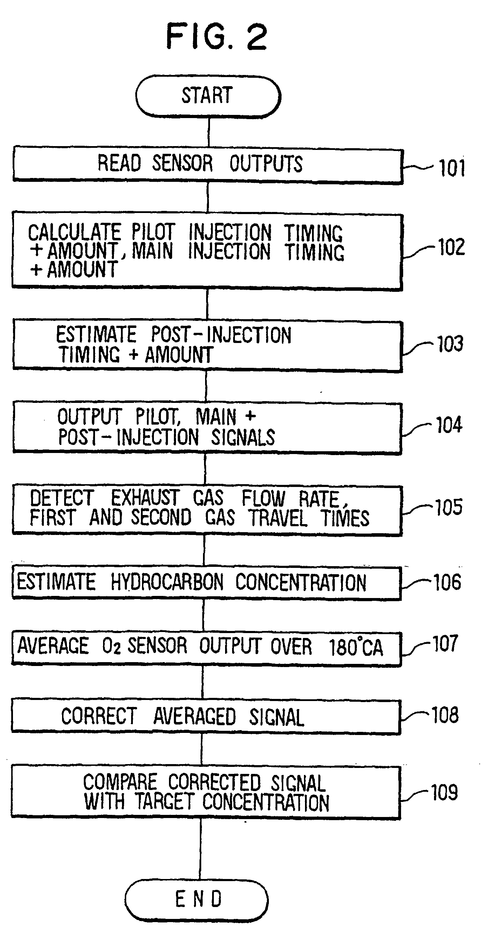

An engine control program shown in FIG. 2 is stored in a ROM (read only memory) in the ECU 25. The ECU 25 functions as injection control means for outputting a main injection command to the fuel injection valve 14 of each cylinder to generate engine output and for outputting a post-injection command for supplying hydrocarbon to the $NO_x$ catalyst 19 and as oxygen sensor correcting means for correcting an output value of the oxygen sensor 20 by executing the engine control program shown in FIG. 2. It also functions as engine control variable correcting means for correcting the EGR gas flow rate which is one of the control variables of the diesel engine 10 in the direction of enhancing the rate of purification of $NO_x$ based on the corrected output value of the oxygen sensor 20.

The engine control executed by the ECU 25 will be explained below by following the flowchart of FIG. 2. The engine control program is executed repeatedly every predetermined time or every predetermined crank angle. When the engine control program is activated, the circuit reads each signal output from the accelerator pedal sensor 26, the engine speed sensor 27, the air flow sensor 12, the oxygen sensor 20 and the exhaust gas temperature sensor 21 to detect the operational state of the diesel engine 10 in Step 101 at first.

After that, Step 102 calculates a pilot injection amount and its injection timing as well as a main injection amount and its injection timing from the output signals of the accelerator pedal sensor 26 and the engine speed sensor 27. Next, Step 103 estimates an $NO_x$ discharge emitted from the diesel engine 10 based on the output signals of the accelerator pedal sensor 26 and the engine speed sensor 27 and calculates a post-injection amount and its injection timing from the estimated $NO_x$ discharge and the output signal from the exhaust gas temperature sensor 21. It is noted that the post-injection is executed when the temperature of the $NO_x$ catalyst 19 is determined to be within the predetermined activated temperature range based on the output signal of the exhaust gas temperature sensor 21.

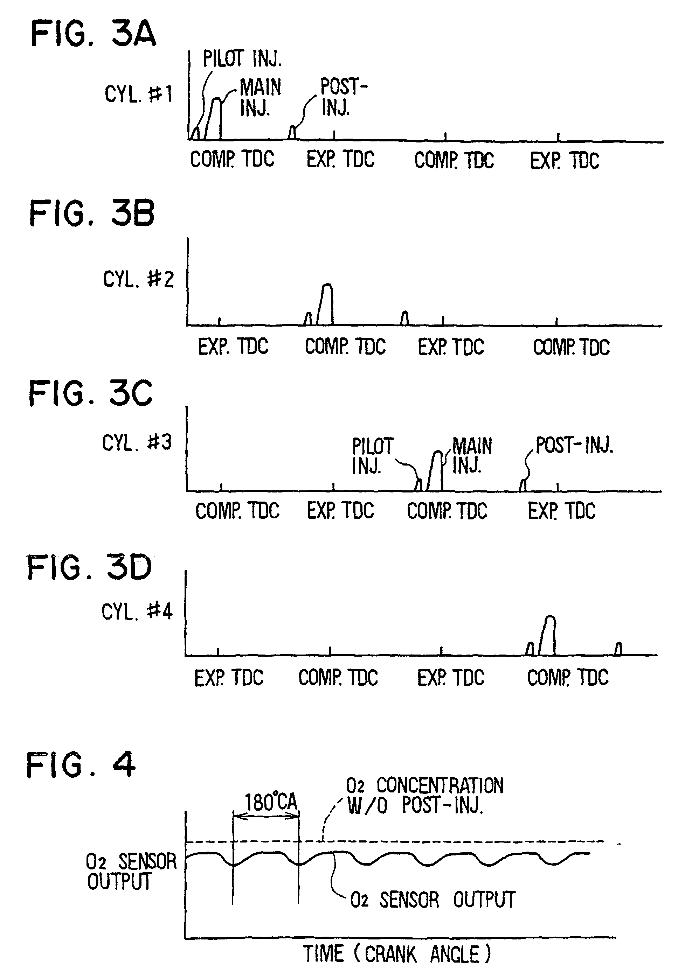

Here, the pilot injection, main injection and post-injection will be explained based on FIGS. 3A - 3D. FIGS. 3A - 3D are graphs showing fuel injection waveforms of the fuel injection valve 14 of each cylinder based on a fuel injection signal from the ECU 25. The main injection is executed near compression top dead center to generate engine output for each cylinder. Prior to the main injection, pilot injection is executed to inject a small amount of fuel into the cylinder. When this fuel is ignited, the main injection is executed to reduce the pre-mixed combustion in the beginning of the combustion to reduce the $NO_x$ discharge. Post-injection is executed in the expansion or exhaust stroke after the combustion. Accordingly, the post-injected fuel is mixed with the exhaust gas while unburned and is discharged from the diesel engine 10. It is then supplied to the $NO_x$ catalyst 19 to be consumed for the reduction and purification of $NO_x$. The pilot injection, main injection and post-injection are executed in the same manner in all of the cylinders in the first embodiment.

After calculating the injection amount and injecting timing of the pilot injection, main injection and post-injection in Steps 102 and 103 in FIG. 2, the process advances to Step 104 to output injection commands of the pilot injection, main injection and post-injection sequentially to the fuel injection valve 14 of each cylinder.

Next, Step 105 detects an exhaust gas flow rate at a predetermined position to calculate a first predetermined time required for the exhaust gas to reach the oxygen sensor 20 since when the exhaust gas flow rate has been detected and to calculate a second predetermined time required for the exhaust gas to reach the oxygen sensor 20 since it has been post-injected. Methods for calculating the first and second predetermined times will be explained below in detail. The predetermined position in this embodiment is set at the position of the air flow sensor 12. The first predetermined time is composed of a first time required for the exhaust gas to move from the air flow sensor 12 to the diesel engine 10, a second time during which it stays within the diesel engine 10 and a third time required for the exhaust gas to move from the diesel engine 10 to the oxygen sensor 20.

A method for calculating the first time will be explained at first. An intake air flow rate per unit time is determined from an intake air flow rate detected by the oxygen sensor 20. Because the intake air flow rate per unit time has been determined in terms of mass flow rate, a volumetric flow rate per unit time may be found by calculations using temperature and pressure. The first time may be found by dividing the above-mentioned volumetric flow rate per unit time by a volume of the intake pipe calculated from the diameter of the intake pipe (known) and the distance (known) from the air flow sensor 12 to the diesel engine 10.

The second time is determined by the engine speed of the diesel engine 10. Because the intake air stays within the diesel engine 10 during one cycle, i.e., two rotations, the second time may be found by finding the rotational period (time required for turning once) from the engine speed and by doubling this rotational period. For instance, when the engine speed is 1000 rpm, the rotational period is 0.06 s and the second time is 0.12 s. When the engine speed is 2000 rpm, the rotational period is 0.03 s and the second time is 0.06 s.

The third time may be found in the same manner with the first time. Here, the exhaust flow rate is estimated to be almost equal to the intake air flow rate detected by the oxygen sensor 20. Similarly to the first time, the exhaust flow rate per unit time is found from the exhaust flow rate and the exhaust flow rate as a volumetric flow rate is found by calculations using temperature and pressure. The third time may be found by dividing the above-mentioned volumetric flow rate per unit by the volume of the exhaust pipe calculated from the diameter of the exhaust pipe (known) and the distance (known) from the diesel engine 10 to the oxygen sensor 20. It is noted that the calculation of the intake air flow rate and the exhaust flow rate may be corrected by the rate of EGR.

The second predetermined time may be found from a time difference from the timing of post-injection to the timing when the output of the oxygen sensor 20 has been dropped and detected (see FIG. 4).

After that, Step 106 estimates the current concentration of hydrocarbon near the oxygen sensor 20 from the exhaust flow rate before the first predetermined time from the present moment and from the post-injection amount before the second predetermined time. Because the exhaust gas before the first predetermined time and the post-injection before the second predetermined time from the present moment have reached near the oxygen sensor 20 at the present moment, the concentration of hydrocarbon near the oxygen sensor 20 at the present moment may be estimated by dividing the post-injection amount before the second predetermined time by the exhaust flow rate before the first predetermined time from the present moment. Then, the concentration of oxygen necessary for burning the estimated hydrocarbon is calculated. For instance, when an average composition of hydrocarbon supplied during the post-injection is $CH_{1.85}$, a reaction formula for burning the hydrocarbon is shown in Equation (1):

$$CH_{1.85} + (1 + 1.85/4)O_2 \rightarrow CO_2 + (1.85/2)H_2O \qquad (1)$$

The amount of oxygen necessary for burning the above-mentioned hydrocarbon is 1.4625 times the amount of hydrocarbon. Because the concentration of hydrocarbon may be considered to be the number of hydrocarbon molecules within the exhaust gas, the necessary number of oxygen molecules is 1.4625 times the number of hydrocarbon molecules. That is, the concentration of oxygen necessary for burning the estimated hydrocarbon may be calculated as 1.4625 times of the estimated concentration of hydrocarbon.

Next, Step 107 averages the output signals of the oxygen sensor 20 per 180° CA. This is carried out to improve the accuracy for detecting the concentration of oxygen by averaging by an output period (180° CA) of the post-injection command because the output signal of the oxygen sensor 20 fluctuates by that period as shown in FIG. 4.

In Step 108, the circuit corrects (incremental correction) the averaged output signal of the oxygen sensor 20 by the concentration of oxygen calculated in Step 106. This is carried out considering that the post-injected and unburned hydrocarbon burns around the oxygen sensor 20, thus dropping the detected concentration of oxygen. The output signal of the oxygen sensor 20 is incrementally corrected by the amount corresponding to the decrease of the concentration of oxygen caused by this combustion. That is, the "concentration of oxygen necessary for burning the estimated concentration of hydrocarbon" calculated in Step 106 corresponds to the concentration of oxygen decreased in the output signal of the oxygen sensor 20. Accordingly, the concentration of oxygen which corresponds to that in the case when no post-injection is executed may be calculated by correcting (incremental correction) the averaged output signal of the oxygen sensor 20 by the concentration of oxygen calculated in Step 106. Thereby, the concentration of oxygen necessary for controlling the EGR (concentration of oxygen within the EGR gas) may be estimated accurately.

After that, Step 109 compares the output signal (concentration of oxygen after the correction) of the oxygen sensor 20 which has been incrementally corrected in Step 108 with a target concentration of oxygen to control the power fed to the EGR control valve 24 in correspondence with the result of comparison to increase or reduce the EGR gas flow rate. That is, because the concentration of oxygen after the correction corresponds to the concentration of oxygen necessary for controlling the EGR (concentration of oxygen within the EGR gas), it is compared with the target concentration of oxygen and the EGR gas flow rate is reduced when the concentration of oxygen after the correction is lower than the target concentration of oxygen. The EGR gas flow rate is increased when the concentration of oxygen after the correction is higher than the target concentration of oxygen.

The concentration of oxygen which corresponds to that in the case when no post-injection is executed, i.e., the concentration of oxygen within the EGR gas necessary for controlling the EGR, may be accurately detected and the accuracy for controlling the EGR may be improved by controlling as described above even if the post-injected and unburned hydrocarbon burns at the oxygen sensor 20 and the detected concentration of oxygen drops. Thereby, $NO_x$ may be purified efficiently as the $NO_x$ catalyst 19 and the EGR effectively perform their functions.

Further, the current concentration of oxygen within the exhaust gas near the oxygen sensor 20 may be detected accurately, the EGR may be controlled accurately and the rate of purification of $NO_x$ by the EGR may be enhanced, even if the diesel engine 10 is in the transient operational state, by taking the time necessary for the exhaust gas to flow through the intake pipe 11 and the exhaust manifold 17 and the time required for the intake, compression, expansion and exhaust strokes within the cylinder into consideration in Step 105.

Although the post-injection has been executed in all of the cylinders in the first embodiment described above, the post-injection may be executed only in part of the cylinders (i.e., intermittent post-injection). Hydrocarbon may be supplied to the $NO_x$ catalyst 19 in proper quantities by setting the total amount of hydrocarbon to be post-injected during one cycle (720° CA) so that it coincides with a target supply for each cycle.

Further, although the output signals of the oxygen sensor 20 have been averaged over 180° CA to execute the post-injection to all of the cylinders in the four-cylinder diesel engine 10 in the first embodiment, they may be averaged over 360° CA when the post-injection is executed intermittently for every other cylinder and over 720° CA when the post-injection is executed only in one cylinder in one cycle. Generally, when the post-injection is executed in M cylinders in one cycle, the output signal of the oxygen sensor 20 may be averaged over (720/M)° CA.

Still more, although the output signal of the oxygen sensor 20 has been incrementally corrected in Step 108 by using the concentration of oxygen calculated in Step 106 in the first embodiment, the target concentration of oxygen may be decrementally corrected by using the concentration of oxygen calculated in Step 106.

[Second Embodiment]

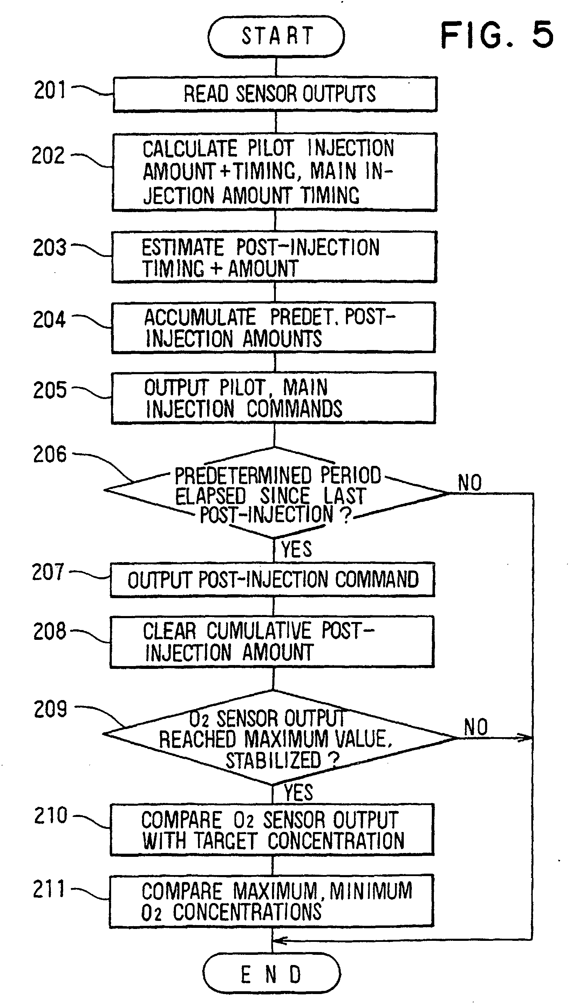

FIGS. 5 through 7 show a second preferred embodiment of the present invention and mainly parts different from the first embodiment described above will be explained below. In the second embodiment, the post-injection is executed intermittently as described below, so that exhaust gas containing hydrocarbon supplied by the post-injection and exhaust gas containing no hydrocarbon alternately flow. Further, the period during which the post-injection is executed is set to be longer than the period determined from the detection of the oxygen sensor 20. Thereby, the concentration of oxygen within the exhaust gas emitted from the cylinder in which no post-injection is executed (concentration of oxygen within the exhaust gas containing no hydrocarbon supplied by the post-injection) may be detected accurately by the oxygen sensor 20 before the exhaust gas containing hydrocarbon supplied by the next post-injection arrives at the oxygen sensor 20.

The control performed in the second embodiment will be explained below while following the flowchart shown in FIG. 5. The engine control program shown in FIG. 5 is executed repeatedly every predetermined time or every given crank angle. When the engine control program is activated, Step 201 reads each signal output from the accelerator pedal sensor 26, the engine speed sensor 27, the air flow sensor 12, the oxygen sensor 20 and the exhaust gas temperature sensor 21. Then, Step 202 calculates a pilot injection amount and its injection timing as well as a main injection amount and its injection timing from the output signals of the accelerator pedal sensor 26 and the engine speed sensor 27. Next, the process advances to Step 203 to estimate an $NO_x$ discharge from the diesel engine 10 based on the output signals of the accelerator pedal sensor 26 and the engine speed sensor 27 and to calculate a post-injection amount and its injection timing from the estimated $NO_x$ discharge and the output signal from the exhaust gas temperature sensor 21.

After that, Step 204 accumulates the predetermined post-injection amounts every time when the program is activated from the end of the post-injection of the last time to find the cumulative post-injection amount in order to calculate the post-injection amount corresponding to the elapsed time (crank angle) from the end of the post-injection of the last time to the present moment. Then, Step 205 outputs injection commands of pilot injection and main injection sequentially to the fuel injection valve 14 of each cylinder.

Next, Step 206 determines whether or not the predetermined time has passed from the end of the post-injection of the last time. Here, the predetermined time is a time longer than the period determined from the detection responsibility of the oxygen sensor 20 and is set within a range of 20 ms to 500 ms or more (preferably within a range of 50 ms to 200 ms), for example. When the predetermined time has not passed since the end of the post-injection of the last time, the present program is finished without executing the processes thereafter. When the predetermined time has passed since the end of the post-injection of the last time, the process advances to Step 207 to output a post-injection command to the fuel injection valve 14 of the appropriate cylinder and the post-injection is executed in the expansion or exhaust stroke of the cylinder.

After that, the process advances to Step 208 to clear the cumulative post-injection amount to zero and to determine whether or not the output signal of the oxygen sensor 20 has reached the maximum value within the above-mentioned predetermined time and has stabilized temporarily in Step 209. That is, it is determined whether or not the oxygen sensor 20 has been able to detect the concentration of oxygen within the exhaust gas containing no unburned hydrocarbon supplied by the post-injection (concentration of oxygen when no post-injection is executed). When the determination of Step 209 is "No", the output signal of the oxygen sensor 20 has been influenced by the post-injection and the concentration of oxygen necessary for controlling the EGR (concentration of oxygen within the EGR gas) cannot be detected accurately, so that the present program is finished without executing the processes thereafter.

When the determination in Step 209 is "YES", i.e., when the concentration of oxygen necessary for controlling the EGR could have been detected, Step 210 compares the output signal of the oxygen sensor 20 with the target concentration of oxygen to increment or decrement the EGR gas flow rate by controlling the power fed to the EGR control valve 24 in correspondence with the result of the comparison. Thereby, the EGR may be controlled accurately and the rate of purification of $NO_x$ by the EGR may be enhanced.

After that, Step 211 compares the maximum value (i.e., the concentration of oxygen in the exhaust gas containing no hydrocarbon supplied by the post-injection) with the minimum value (i.e., the concentration of oxygen in the exhaust gas containing hydrocarbon supplied by the post-injection) within the above-mentioned predetermined time in the output signal of the oxygen sensor 20 to calculate the variation of the output of the oxygen sensor 20 within the predetermined time and to calculate an amount of hydrocarbon post-injected based on the variation. When the calculated value deviates from the target amount of hydrocarbon, the command value of the post-injection is incremented or decremented.

The calculation of the variation of the output of the oxygen sensor 20 within the predetermined time may be executed also by integrating (accumulating) the difference between the output of the oxygen sensor 20 and the concentration of oxygen when no post-injection is executed within the predetermined time in Step 211. In this case, the variation of the output of the oxygen sensor 20 in which the state of change in the middle of the output of the oxygen sensor 20 is also taken into consideration may be found.

In this case, because the change of the output of the oxygen sensor 20 is induced by the fact that the exhaust gas containing hydrocarbon supplied by the post-injection and the exhaust gas containing no hydrocarbon flow alternately, it is possible to estimate the amount of hydrocarbon post-injected from the variation of the output of the oxygen sensor 20 within the predetermined time. Accordingly, the deviation of the post-injection amount caused by the difference of individual signals (variation) and the elapsed deterioration of the fuel injection valve 14 and the error of the control system may be corrected and hydrocarbon may be supplied always in proper quantities stably to the $NO_x$ catalyst 19, thus contributing to the improvement of the rate of purification of $NO_x$, by correcting the amount of post-injected hydrocarbon based on the variation of the output of the oxygen sensor 20.

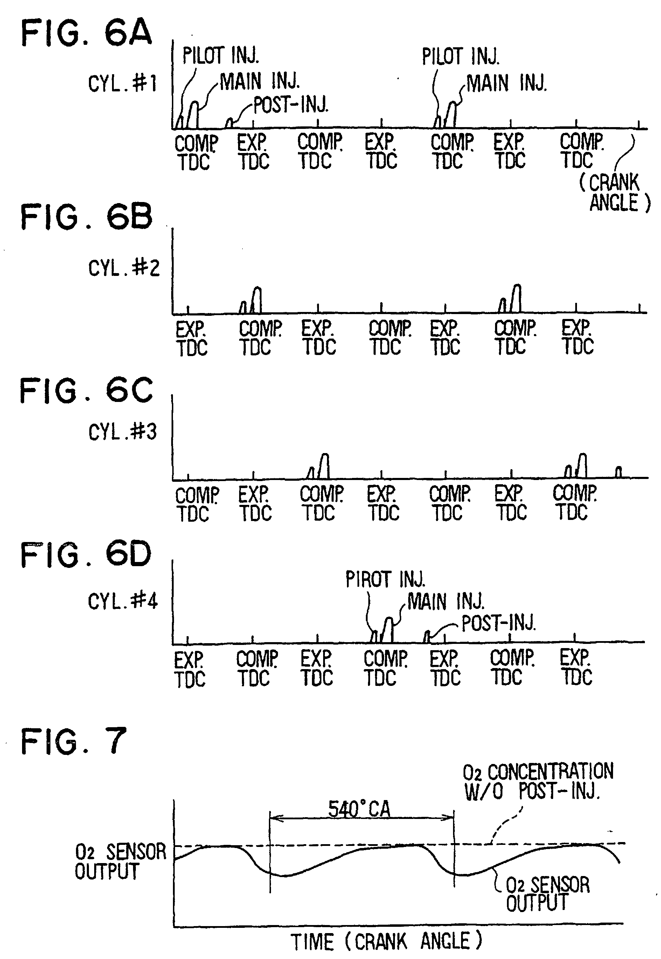

FIGS. 6A-6D are graphs showing fuel injection waveforms of cylinders (1) through (4) when the engine control program shown in FIG. 5 is executed during steady-state operation. While the pilot injection and main injection are executed in the same manner in all of cylinders (1) through (4), the post-injection is not executed in cylinders (2) and (3) because it is not executed until the predetermined time which is longer than the period determined from the detection responsibility of the oxygen sensor 20 elapses since it has been executed in cylinder (1). It is then executed in cylinder (4) after the elapse of the predetermined time. Because post-injection is not executed again until the predetermined time elapses since it has been executed in cylinder (4), it is not executed in cylinders (1) and (2). It is executed in cylinder (4) when the predetermined time elapses and the same process is repeated thereafter.

FIG. 7 is a graph showing a waveform of the output signal of the oxygen sensor 20 when the post-injection shown in the above-mentioned graphs in FIGS. 6A-6D is executed. The output signal of the oxygen sensor 20 drops every time post-injection is executed in cylinder (1), cylinder (4) and cylinder (3) as shown in FIG. 7. The period of fluctuation of the output corresponds to 540° CA. Because the exhaust gas containing no unburned hydrocarbon supplied by the post-injection is discharged from the two cylinders and flows into the oxygen sensor 20 to be replaced within the oxygen sensor 20 since the time the post-injection has been executed until the next post-injection is executed, the output of the oxygen sensor 20 increases. Thereby, the output of the oxygen sensor 20 reaches the maximum value (i.e., the concentration of oxygen within the exhaust gas when no post-injection is executed) after the predetermined time which is determined from the detection responsibility of the oxygen sensor 20 and the concentration of oxygen necessary for controlling the EGR (the concentration of oxygen within the EGR gas) may be detected accurately without being influenced by the post-injection by detecting the maximum value.

Because the concentration of oxygen necessary for controlling the EGR may be detected accurately without being influenced by the post-injection by setting the period during which the post-injection is executed to be longer than the period determined from the detection responsibility of the oxygen sensor 20 in the second embodiment described above, the output signal of the oxygen sensor 20 need not be corrected, thus differing from the first embodiment described above. That is, the EGR may be controlled accurately and the rate of purification of $NO_x$ by the EGR may be enhanced without correcting the output signal of the oxygen sensor 20, i.e., by using it in controlling the EGR as it is. Thereby, it becomes possible to purify $NO_x$ efficiently by effectively exhibiting the both functions of the $NO_x$ catalyst 19 and the EGR.

[Third Embodiment]

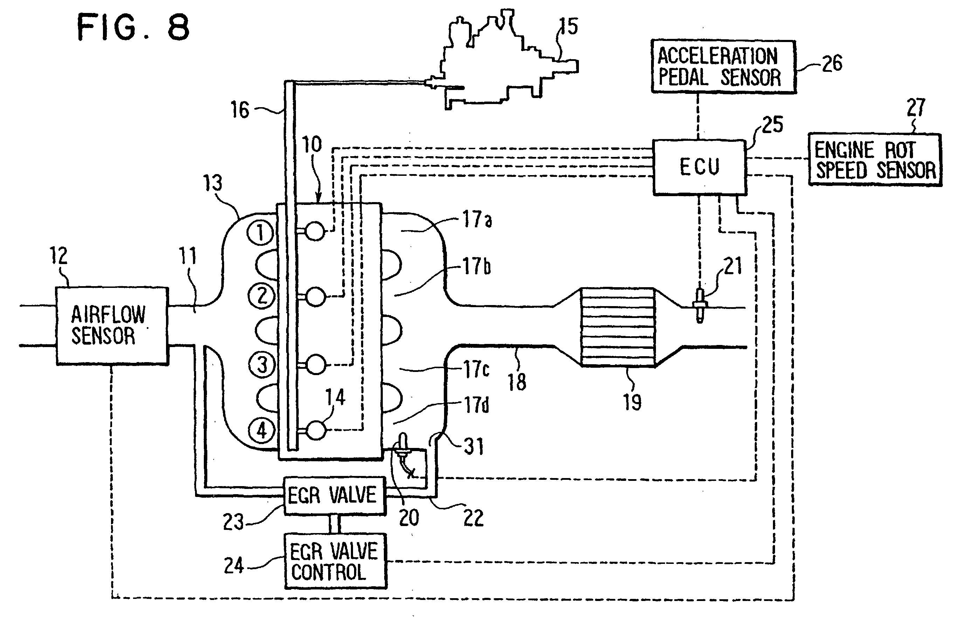

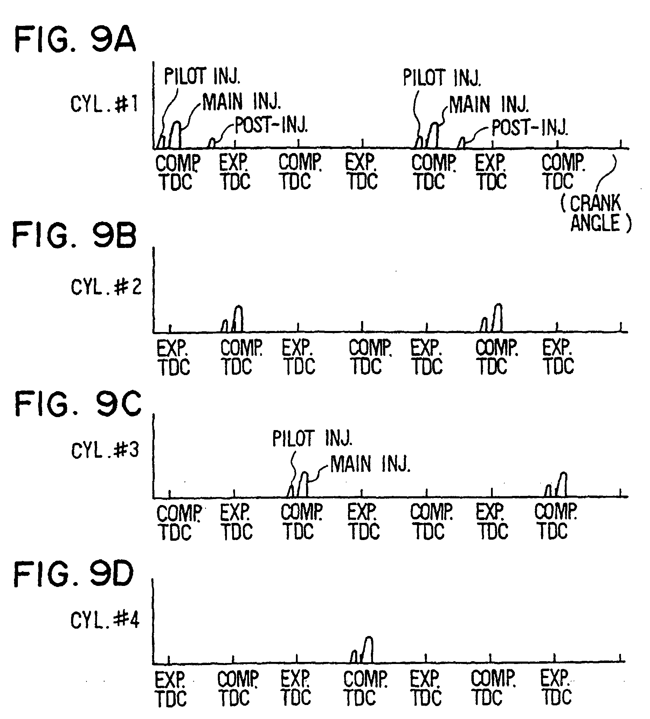

The post-injection is executed only in a specific cylinder (cylinder (1) in the present case) in a third preferred embodiment of the present invention shown in FIGS. 8 and 9A-9D. That is, the post-injection amount of all the cylinders is injected only in the specific cylinder (1). What is different from the structure shown in FIG. 1 in the third embodiment is that the position where the oxygen sensor 20 is set and the position of a connection port 31 of the EGR pipe 22 (exhaust gas recirculating passage) on the exhaust pipe side. That is, the oxygen sensor 20 is disposed in the exhaust manifold 17d of cylinder (4) at the position distant farthest from the specific cylinder (1) in which the post-injection is executed in the third embodiment. Similarly, the connection port 31 of the EGR pipe 22 on the exhaust pipe side is connected to the exhaust manifold 17d of cylinder (4) at the position most distant from the specific cylinder (1) in which the post-injection is executed.

FIGS. 9A-9D are graphs showing fuel injection waveforms of cylinders (1) through (4) in the third embodiment. Although pilot injection and main injection are executed in the same manner to all cylinders, post-injection is executed only in the specific cylinder (1). When post-injection is thus executed only in the specific cylinder (1), the exhaust gas containing hydrocarbon supplied by the post-injection flows only to the exhaust manifold 17a of the specific cylinder (1) and the exhaust gas containing no hydrocarbon supplied by the post-injection flows to the exhaust manifolds 17b, 17c and 17d of the other cylinders (2), (3) and (4).

In this case, while a phenomenon in which part of the exhaust gas containing hydrocarbon flowing out of the exhaust manifold 17a of cylinder (1) in which post-injection has been executed flows backward to and diffuses in the exhaust manifolds 17b, 17c and 17d of the other cylinders (2), (3) and (4), the further from the cylinder (1) in which the post-injection is executed, the less significant this counterflow and diffusion phenomenon becomes. Accordingly, because the counterflow and diffusion phenomenon of the post-injected hydrocarbon occurs least in the exhaust manifold 17d of cylinder (4) which is distant most from cylinder (1) in which the post-injection is executed, the concentration of oxygen may be detected relatively accurately without being influenced by hydrocarbon supplied by post-injection by disposing the oxygen sensor 20 at the exhaust manifold 17d of the cylinder (4). In this case, the concentration of oxygen within the exhaust gas may be detected relatively accurately without correcting the output value of the oxygen sensor 20 like the first embodiment described above.

For the same reason, the EGR pipe 22 is connected to the exhaust manifold 17d of the cylinder (4) at the position distant most from the specific cylinder (1) in which post-injection is executed, so that the exhaust gas containing hydrocarbon supplied by post-injection is hardly returned to the induction system via the EGR pipe 22 even when post-injection is executed in the cylinder (1), the supply of hydrocarbon by the EGR may be suppressed from reducing and the rate of purification of $NO_x$ of the $NO_x$ catalyst 19 may be prevented from dropping. Thereby, it becomes possible to purify $NO_x$ efficiently while exhibiting both functions of the $NO_x$ catalyst 19 and the EGR effectively.

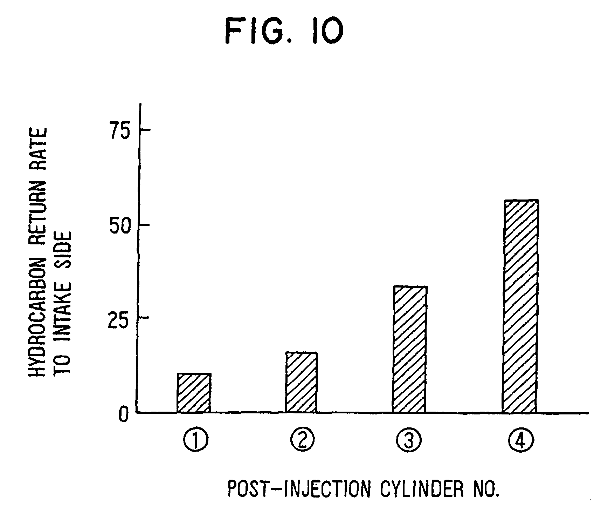

FIG. 10 shows rates of hydrocarbon recirculated to the induction side by the EGR among the amount of hydrocarbon post-injected when the cylinders in which the post-injection is executed are changed sequentially from (1) to (4) when the rate of EGR is 30%. The rate of recirculation to the induction side is the highest when the post-injection is executed in the cylinder (4) which is closest to the EGR pipe 22 and the rate of recirculation to the induction side is the lowest when the post-injection is executed in the cylinder (1) which is most distant from the EGR pipe 22.

It is noted that the oxygen sensor 20 is positioned at the upstream side of the connection port of the EGR pipe 22 at the exhaust pipe side in the example shown in FIG. 9; however, this order may be reversed.

Further, although the specific cylinder in which the post-injection is executed has been only one cylinder in the third embodiment, it may be two or more cylinders. It is also possible in this case to set the position of the oxygen sensor 20 and that of the connection port 31 of the EGR pipe 22 on the exhaust pipe side in the exhaust manifold of the cylinder distant most from the specific cylinders in which the post-injection is executed.

[Fourth Embodiment]

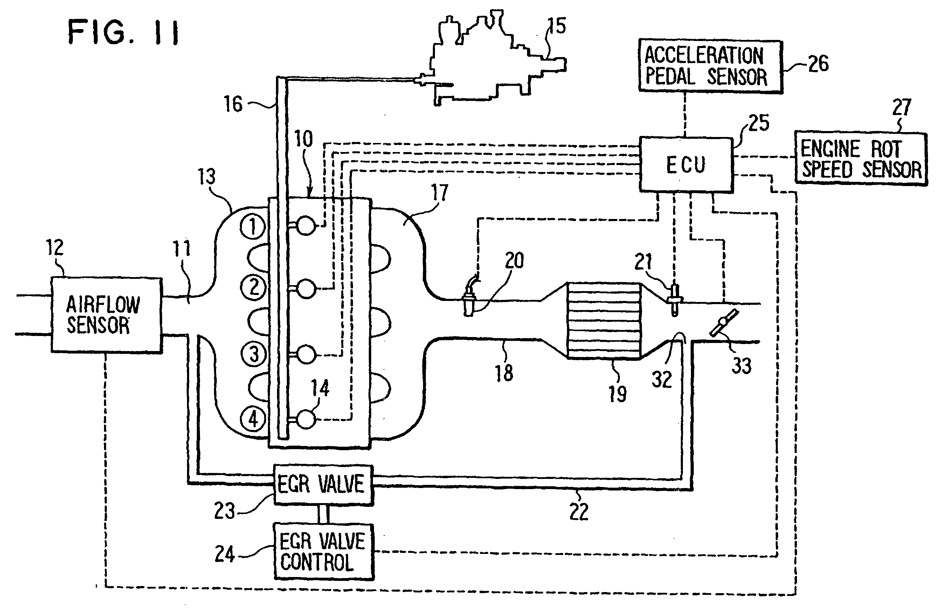

FIG. 11 shows a fourth preferred embodiment of the present invention. This embodiment is different from the structure shown in FIG. 1 in that the connection port 32 of the EGR pipe 22 on the exhaust pipe side is connected to the downstream side of the $NO_x$ catalyst 19 and that an exhaust throttle valve 33 is on the downstream side of the connection port 32 of the EGR pipe 22 on the exhaust pipe side. Thereby, all of the exhaust gas containing unburned hydrocarbon supplied by post-injection flows into the $NO_x$ catalyst 19 to be used for the reduction and purification of $NO_x$, and part of the exhaust gas containing no unburned hydrocarbon or containing unburned hydrocarbon a little which has passed through the $NO_x$ catalyst 19 is returned to the intake pipe 11 as the EGR gas. Accordingly, even when EGR is executed, the supply of hydrocarbon to the $NO_x$ catalyst 19 by post-injection is not reduced at all and it becomes possible to purify $NO_x$ efficiently by effectively exhibiting both functions of the $NO_x$ catalyst 19 and the EGR.

In this case, because the exhaust pressure at the downstream side of the $NO_x$ catalyst 19 is low compared to that of the upstream side, there is a case where the EGR gas flow rate cannot be obtained fully. Then, the exhaust pressure at the connection port 32 of the EGR pipe 22 is boosted to maintain enough EGR gas flow by providing the exhaust throttle valve 33 at the downstream side of the connection port 32 of the EGR pipe 22 on the exhaust pipe side and by throttling the aperture of the exhaust throttle valve 33 only when the EGR is controlled in the fourth embodiment.

[Fifth Embodiment]

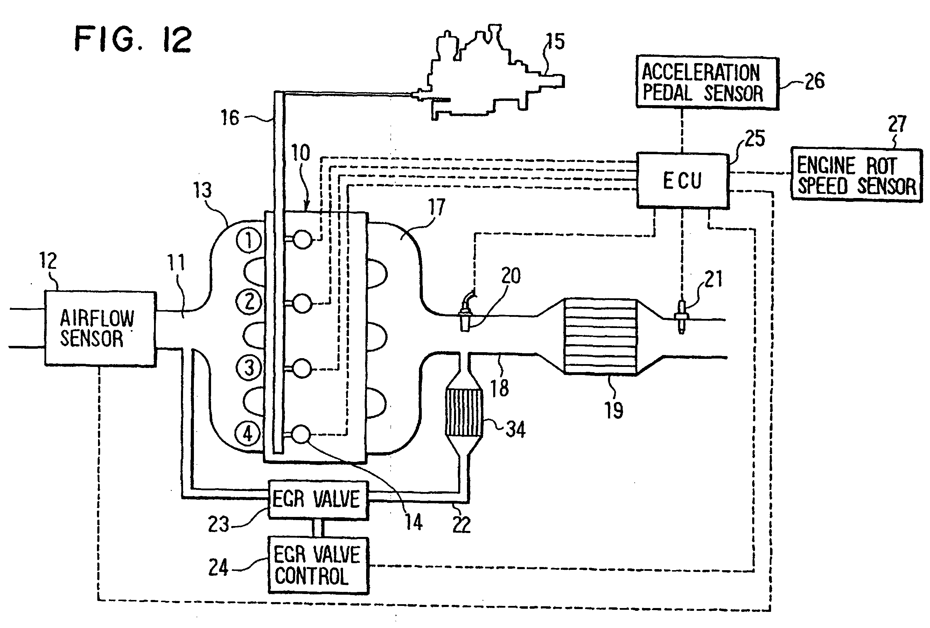

FIG. 12 shows a fifth preferred embodiment of the present invention whose structure is different from the structure shown in FIG. 1 in that an $NO_x$ catalyst for EGR gas 34 for reducing and purifying $NO_x$ within the EGR gas is in the EGR pipe 22. In this structure, hydrocarbon within the EGR gas reacts with $NO_x$ and the $NO_x$ is reduced and purified by the catalytic action of the $NO_x$ catalyst for EGR gas 34 in the process when the part of the exhaust gas containing the post-injected hydrocarbon flows through the EGR pipe 22 as the EGR gas and passes through the $NO_x$ catalyst 34 for EGR gas. Thereby, $NO_x$ within the EGR gas which is returned to the diesel engine 10 is reduced, $NO_x$ is reduced efficiently by the EGR, and $NO_x$ emitted from the diesel engine 10 is reduced.

It is noted that the $NO_x$ catalyst for EGR gas 34 may be disposed on the upstream/downstream side of the EGR valve 23 as long as it is disposed in the middle of the EGR pipe 22.

[Sixth Embodiment]

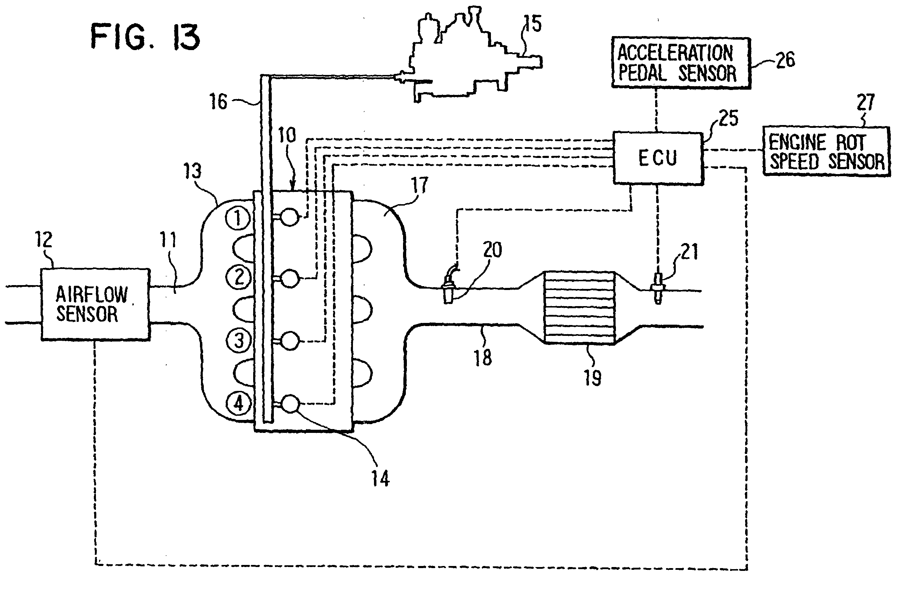

A sixth embodiment in which the present invention is applied to a four-cylinder diesel engine, for example, will be explained below based on FIGS. 13 through 15E. As seen in FIG. 13, the structure of this embodiment is different from that of the first embodiment in that the EGR passage 22, EGR valve 23, and EGR controller 24 are omitted.

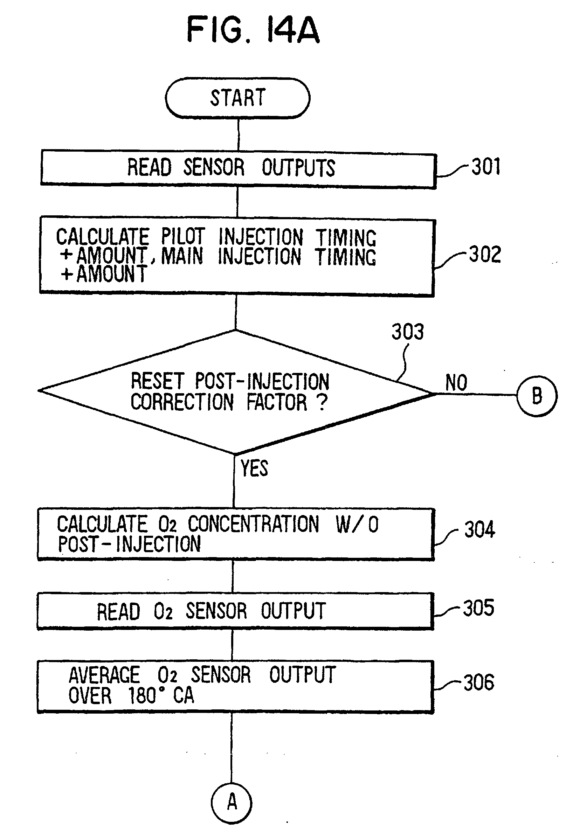

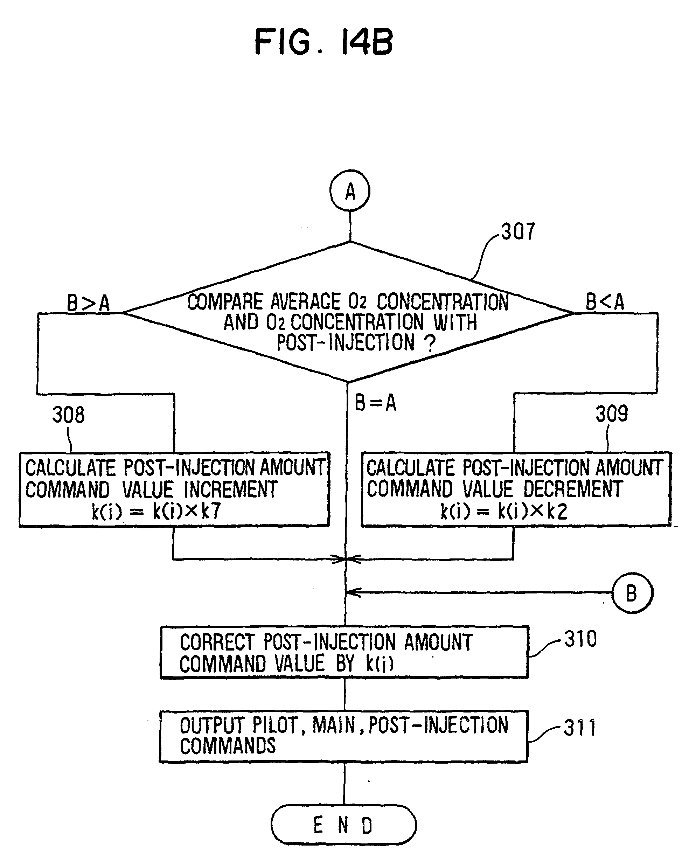

The contents of the injection control program executed by the ECU 25 in this embodiment will be explained below based on the flowchart shown in FIGS. 14A and 14B. The injection control program is executed repeatedly every predetermined time or every predetermined crank angle. When the injection control program is activated, the circuit reads each signal output from the accelerator pedal sensor 26, the engine speed sensor 27, the air flow sensor 12 and the exhaust gas temperature sensor 21 in order to detect the operational state of the diesel engine 10 in Step 301. It also reads a correction factor $k(i)$ ($i$ = 1 to 4) of the post-injection amount command value of each cylinder stored in the RAM (not shown) of the ECU 25.

After that, Step 302 calculates a pilot injection amount and its injection timing as well as a main injection amount and its injection timing from the output signals of the accelerator pedal sensor 26 and the engine speed sensor 27. Further, it estimates an $NO_x$ discharge amount from the diesel engine 10 based on the output signals of the accelerator pedal sensor 26 and the engine speed sensor 27 and calculates command values of a post-injection amount and its injection timing from the estimated $NO_x$ discharge and the output signal from the exhaust gas temperature sensor 21. It is noted that post-injection is executed when the temperature of the $NO_x$ catalyst 19 is determined to be within a predetermined activated temperature range based on the output signal of the exhaust gas temperature sensor 21.

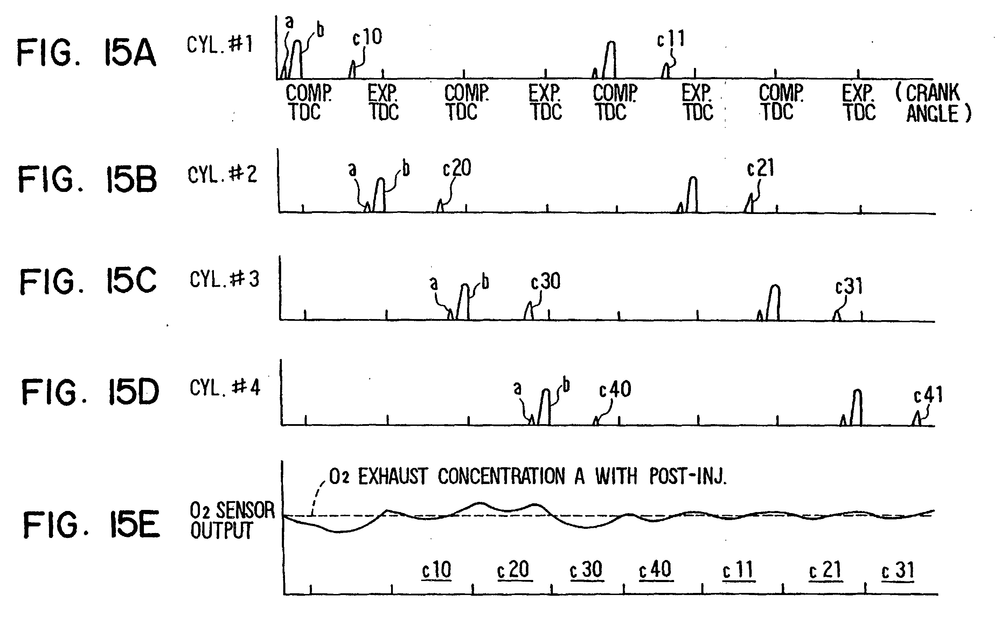

Here, the pilot injection, main injection and post-injection will be explained based on FIGS. 15A-15E. FIGS. 15A-15E are graphs showing fuel injection waveforms of the fuel injection valve 14 of each cylinder based on a fuel injection signal from the ECU 25. Reference letter (a) within FIGS. 15A-15E denotes pilot injection, reference letter (b) main injection and reference letters (c10 through c41) post-injection. Main injection is executed near the compression top dead center to generate engine output for each cylinder. Prior to main injection, pilot injection is executed to inject a small amount of fuel. When this fuel is ignited, main injection is executed to reduce the pre-mixed combustion at the beginning of the combustion to reduce the $NO_x$ discharge. Post-injection is executed in the expansion or exhaust stroke after combustion. Accordingly, the post-injected fuel is mixed with the exhaust gas while in the unburned state and is discharged from the diesel engine 10. It is then supplied to the $NO_x$ catalyst 19 to be consumed for the reduction and purification of $NO_x$. Post-injection is executed in all of the cylinders for the fuel injection in the sixth embodiment.

As noted above, Step 302 in FIG. 14A calculates command values of the injection amount and injection timing of pilot injection, main injection and post-injection and determines whether the correction factor $k(i)$ ($i$ = 1 to 4) of the post-injection amount command value of each cylinder needs to be set again in Step 303. It is determined to be necessary to set again when the correction factor $k(i)$ has not been set again at all so far when the difference of individual variations of the fuel injection valve 14 is to be corrected and it is determined to be necessary to set again when it has reached a predetermined cumulative running distance since the correction factor $k(i)$ has been set again the last time when the elapsed deterioration is to be corrected. Further, it is determined to be necessary to set the correction factor $k(i)$ again for each elapse of a predetermined time or when the engine running state changes significantly when a common rail pressure (fuel pressure) is to be corrected.

When it is determined not to be necessary to set the correction factor $k(i)$ again in Step 303 described above, the process advances to Step 310. When it is determined to be necessary to set it again, the process advances to Step 304 to calculate the concentration of oxygen within the exhaust gas when no post-injection is executed from map data or the like found by experiments and simulation in advance based on the output signals of the accelerator pedal sensor 26 and the engine speed sensor 27. Then, the exhaust gas flow rate is calculated from the output signal of the air flow sensor 12, an amount of HC (hydrocarbon) is calculated from the post-injection amount command value, the concentration of HC within the exhaust gas is calculated from the exhaust gas flow rate and the amount of HC and the concentration of oxygen A within the exhaust gas when post-injection is executed is calculated by subtracting the concentration of oxygen necessary for burning the concentration of HC within the exhaust gas from the concentration of oxygen within the exhaust gas described above when the post-injection is not executed.

After that, Step 305 reads the output signal of the oxygen sensor 20. Step 306 then averages the output signal of the oxygen sensor 20 over 180° CA to find an average concentration of oxygen B. Here, the concentration of oxygen is averaged to improve the accuracy of detecting the concentration of oxygen by averaging by the output period of the post-injection command because the output signal of the oxygen sensor 20 fluctuates with that period.

Next, Step 307 in FIG. 14B compares the average concentration of oxygen B calculated in Step 306 and the concentration of oxygen in exhaust gas A when the post-injection is executed calculated in Step 304. When B > A, it is determined that the actual HC supply (post-injection amount) is less than the amount of HC to be supplied by the post-injection (command value). Step 308 then calculates a coefficient of increment k1 (k1 > 1) of the post-injection amount command value corresponding to the difference between B and A and to set the correction factor $k(i)$ of the post-injection amount command value again by multiplying the correction factor $k(i)$ of the post-injection amount command value used in the last time with the coefficient of increment k1 ($k(i) = K(i) \times k1$). Then, the process advances to Step 310.

On the other hand, when B = A, it is determined that the amount of HC to be supplied by the post-injection coincides with the actual supply of HC. In this case, the correction factor k(i) of the post-injection amount command value used in the last time can be used also this time as it is, so that the process advances to Step 310 as it is.

When B < A, it is determined that the actual supply of HC is greater than the amount of HC to be supplied by post-injection. Then, Step 309 calculates a coefficient of decrement k2 (k2 < 1) of the post-injection amount command value corresponding to the difference between B and A and to set the correction factor k(i) of the post-injection amount command value again by multiplying the correction factor k(i) of the post-injection amount command value used in the last time with the coefficient of decrement k2 (k(i) = k(i) x k2). Then, the process advances to Step 310.

It is noted that the process advances to Step 310 also when it is determined in Step 303 described above that the correction factor k(i) of the post-injection amount command value need not be set again.

Step 310 corrects the post-injection amount command value by the correction factor k(i) by multiplying the post-injection amount command value with the correction factor k(i) (post-injection amount command value = post-injection amount command value x k(i)). Step 311 then outputs commands (injection amount and injection timing) of the pilot injection, main injection and post-injection to the fuel injection valve 14.

An operational example of the injection control program described above will be explained by using FIGS. 15A-15E. FIGS. 15A-15D are graphs showing fuel injection waveforms of the first through fourth cylinders (1) through (4) and FIG. 15E is a waveform of an output signal of the oxygen sensor 20 during steady-state operation. In FIG. 15E, the solid line indicates an actual sensor output and the broken line indicates the concentration of oxygen in exhaust gas A when post-injection is executed calculated in Step 304.

When fuel is injected in cylinder (1), the exhaust gas flows into the oxygen sensor 20 in the exhaust stroke so that a phase (time) delays and the output of the oxygen sensor 20 changes. When the output of the oxygen sensor 20 in the exhaust gas (c10) corresponding to cylinder (1) is averaged by the crank angle of 180°, it becomes equal to the concentration of oxygen in exhaust gas A indicated by the broken line. That is, because the amount of post-injection c10 executed in the cylinder (1) coincides with the target amount of post-injection (command value), the correction factor k(i) of the post-injection amount command value is not set again. Accordingly, the amount of the next post-injection c11 of cylinder (1) is equal to that of c10.

Next, when the output of the oxygen sensor 20 of the exhaust gas (c20) from cylinder (2) is averaged by the crank angle of 180°, it assumes a value higher than the concentration of oxygen in exhaust gas A indicated by the broken line. That is, because the amount of post-injection c20 executed in cylinder (2) is less than the target amount of post-injection, the correction factor k(2) of the post-injection amount command value is multiplied by the coefficient of increment k1 (k1 > 1) to be set again. Accordingly, the amount of the next post-injection c21 is incremented more than that of c20.

Next, when the output of the oxygen sensor 20 of the exhaust gas (c20) from cylinder (3) is averaged by the crank angle of 180°, it assumes a value lower than the concentration of oxygen in exhaust gas A indicated by the broken line. That is, because the amount of post-injection c30 executed in cylinder (3) is greater than the target amount of post-injection, the correction factor k(3) of the post-injection amount command value is multiplied with the coefficient of decrement k2 (K2 > 1) to be set again. Accordingly, the amount of the next post-injection c31 is decremented to be less than that of c30.

When the output of the oxygen sensor 20 in the exhaust gas (c40) from cylinder (4) is averaged by the crank angle of 180°, it becomes equal to the concentration of oxygen in exhaust gas A indicated by the broken line. That is, because the amount of post-injection c40 executed in cylinder (4) coincides with the target amount of post-injection, the correction factor k(4) of the post-injection amount command value is not set again. Accordingly, the amount of the next post-injection c41 of cylinder (4) is equal to that of c40.

Because the amount of post-injection (c11 through c41) of each cylinder of the next cycle has been corrected by the above-mentioned processes, the output of the oxygen sensor 20 of the exhaust gas from each cylinder becomes equal to the concentration of oxygen in the exhaust gas A indicated by the broken line when it is averaged by the crank angle of 180°. Thus, even if there are differences of individual signals (variation), elapsed change and fluctuation of the injection pressure of the fuel injection valve 14, the proper amount of hydrocarbon may be always supplied to the catalyst, the rate of purification of $NO_x$ may be improved and the post-injected unburned hydrocarbon may be prevented from being emitted, thus meeting with the needs of low emission, by correcting the command value of the post-injection amount by the actual post-injection amount detected by the oxygen sensor 20.

Although the output of the oxygen sensor 20 has been averaged over 180° CA in the sixth embodiment, it may be averaged over 360° CA or 720° CA, for example.

Further, the concentration of HC within the exhaust gas may be calculated by calculating the exhaust gas flow rate by the output signal of the air flow sensor 12 and the rate of EGR determined from the engine running state in Step 304. Alternatively, the exhaust gas flow rate may be calculated from the engine speed.

[Seventh Embodiment]

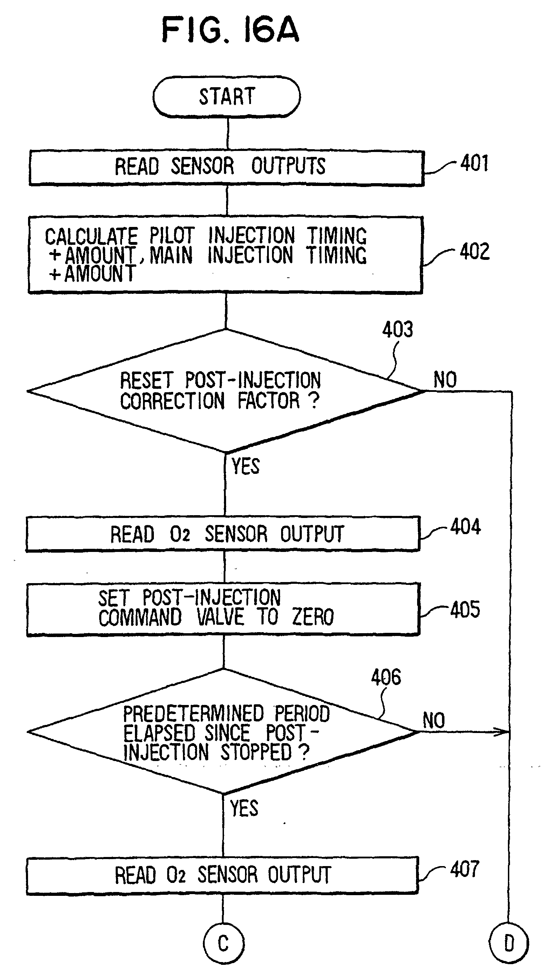

While the concentration of oxygen in exhaust gas when no post-injection is executed has been calculated by using the map data from the output signals of the accelerator pedal sensor 26 and the engine speed sensor 27 in Step 304 in FIG. 14A in the sixth embodiment, the concentration of oxygen in exhaust gas when no post-injection is executed is actually measured by the oxygen sensor 20 by stopping the post-injection for a predetermined time in the seventh embodiment shown in FIGS. 16A through 17E. The system structure of the seventh embodiment is the same as the structure shown in FIG. 13 and explained in connection with the sixth embodiment.

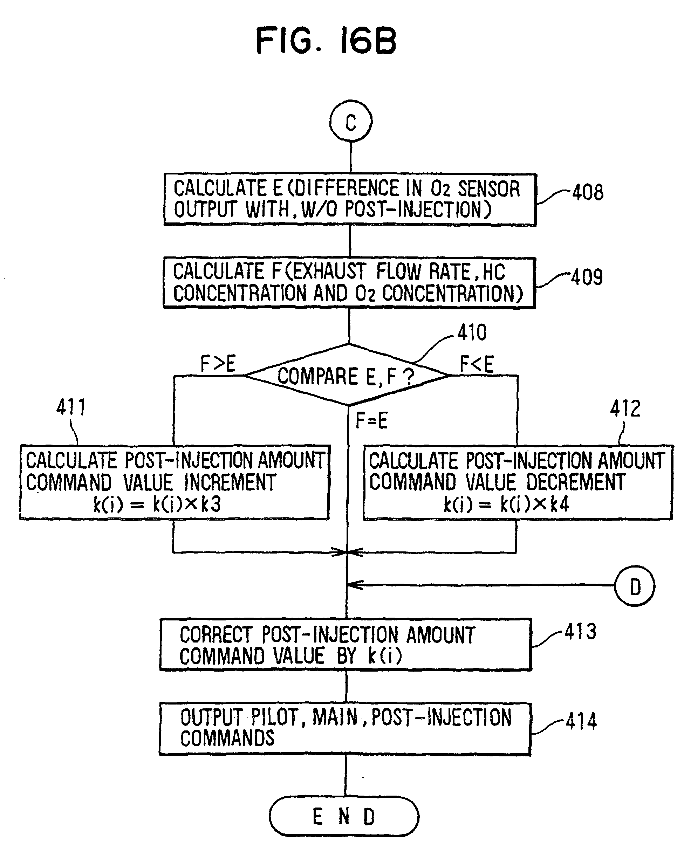

The contents of the injection control program executed in the seventh embodiment and shown in FIGS. 16A and 16B will be explained below. The processes in Steps 401 through 403 are the same as those in Steps 301 through 303 shown in FIG. 14A. When Step 403 determines that it is not necessary to set the correction factor $k(i)$ ($i$ = 1 to 4) again, the process advances to Step 413 in FIG. 16B described below. When it is determined to be necessary to set the correction factor again, Step 404 reads the output of the oxygen sensor 20 when post-injection is executed and then Step 405 temporarily sets the post-injection amount command value of all the cylinders to zero to stop the post-injection of all the cylinders.

After that, Step 406 determines whether or not the "predetermined time" has passed since the post-injection had been stopped. Here, the "predetermined time" is set to a time longer than the period determined from the responsiveness of the oxygen sensor 20, e.g., 0.2 s to 0.5 s. When Step 406 determines that the predetermined time has not passed yet, the process advances to Step 413 in FIG. 16B described below. When Step 406 determines that the predetermined time has passed, Step 407 reads the output of the oxygen sensor 20 when no post-injection is executed (i.e., while the post-injection is stopped) to detect the concentration of oxygen in exhaust gas when no post-injection is executed.

Then, Step 408 in FIG. 16B calculates the difference between the output C of the oxygen sensor 20 when post-injection is executed read in Step 404 and the output D of the oxygen sensor 20 when no post-injection is executed read in Step 407 (i.e., actual variation of concentration of oxygen supplied by the post-injection). After that, Step 409 calculates the exhaust gas flow rate from the output signal of the air flow sensor 12 to calculate an amount of HC corresponding to the post-injection amount command value, to calculate the concentration of HC within the exhaust gas from the exhaust gas flow rate and the amount of HC and to calculate the concentration of oxygen F necessary for burning the concentration of HC within the exhaust gas (i.e., the variation of the concentration of oxygen estimated from the post-injection amount command value).

Then, Step 410 compares the difference E between the output C of the oxygen sensor 20 when the post-injection is executed read in Step 408 and the output D of the oxygen sensor 20 when no post-injection is executed with the concentration of oxygen F necessary for burning the concentration of HC within the exhaust gas calculated in Step 409. When F > E, it is determined that the actual supply of HC is less than the amount of HC to be supplied by the post-injection (commanded value). Then, Step 411 calculates a coefficient of increment k3 (k3 > 1) of the post-injection amount command value corresponding to the difference between F and E and to set the correction factor k(i) of the post-injection amount command value again by multiplying the correction factor k(i) ($i$ = 1 to 4) of the post-injection amount command value used the last time with the coefficient of increment k3 ($k(i)$ = $k(i)$ x k3). The process then advances to Step 413.

When F = E, it is determined that the amount of HC to be supplied by the post-injection coincides with the actual supply of HC. Because the correction factor k(i) of the post-injection amount command value used in the last time can be used as it is in this case, the process advances to Step 413 as it is.

When F < E, it is determined that the actual supply of HC is greater than the amount of HC to be supplied by the post-injection. Then, Step 412 calculates a coefficient of decrement k4 of the post-injection amount command value corresponding to the difference between F and E and to set the correction factor k(i) of the post-injection amount command value again by multiplying the correction factor k(i) of the post-injection amount command value used in the last time with the coefficient of decrement k4 ($k(i)$ = $k(i)$ x k4). The process then advances to Step 413.

Step 413 corrects the post-injection amount command value by the correction factor k(i) by multiplying the post-injection amount command value by the correction factor k(i) (post-injection amount command value = post-injection amount command value x $k(i)$). Then, Step 414 outputs the commands (injection amount, injection timing) of pilot injection, main injection and post-injection to the fuel injection valve 14.

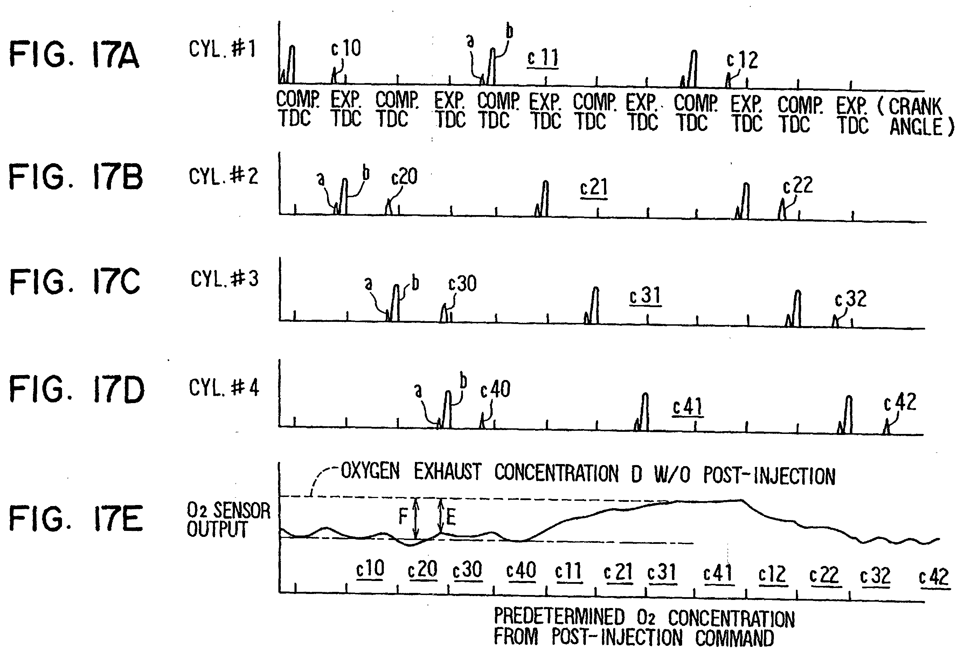

An operational example of the injection control program described above will be explained by using FIGS. 17A-17E. FIGS. 17A-17D are graphs showing fuel injection waveforms of first through fourth cylinders (1) through (4) and FIG. 17E shows an output signal wave of the oxygen sensor 20 during steady-state operation. Reference letter (a) in FIGS. 17A-17D denotes pilot injection, reference letter (b) the main injection and reference letters (c10 through c42) the post-injection. In FIG. 17E, the solid line indicates an actual output of the sensor, the broken line indicates the concentration of oxygen in exhaust gas when no post-injection is executed, and the alternate chain line indicates the concentration of oxygen in exhaust gas estimated from the post-injection command value.

At first, the post-injections (c10 through c40) are executed sequentially from cylinder (1) to cylinder (4) and the concentration of oxygen C of the exhaust gas emitted from each cylinder at that time is detected. Then, the post-injections (c11 through c41) of all cylinders (1) through (4) are set to zero, so that the output of the oxygen sensor 20 gradually reaches the concentration of oxygen D when no post-injection is executed. Next, the variation E of the concentration of oxygen caused by the post-injection executed for each cylinder is calculated from the difference between the detected concentration of oxygen D when no post-injection is executed and the concentration of oxygen C of the exhaust gas emitted from each cylinder. After that, the variation F of the concentration of oxygen estimated from the post-injection amount command value is compared with the actual variation E of the concentration of oxygen caused by the post-injection executed for each cylinder to correct the post-injection amount command value.

Because the amount of the post-injection c10 executed in the cylinder (1) coincides with the target amount of post-injection (commanded value) in the example shown in FIGS. 17A-17E, the correction factor k(i) of the post-injection amount command value is not set again. Accordingly, the amount of the post-injection c12 of the cylinder (1) at the time immediately after the next is equal to that of c10. Next, because the amount of the post-injection c20 executed in cylinder (2) is less than the target amount of post-injection, the correction factor k(2) of the post-injection amount command value is multiplied by a coefficient of increment k3 to be set again. Accordingly, the amount of post-injection c22 of cylinder (2) at the time immediately after the next is incremented more than that of c20. Next, because the amount of post-injection c30 executed in cylinder (3) is greater than the targeted amount of post-injection, the correction factor k(3) of the post-injection amount command value is set again by multiplying by a coefficient of decrement k4. Accordingly, the amount of post-injection c32 of cylinder (3) at the time immediately after the next is decremented to be less than that of c30.

Next, because the amount of post-injection c40 executed in cylinder (4) coincides with the target amount of post-injection, the correction factor k(4) of the post-injection amount command value is not set again. Accordingly, the amount of post-injection c42 of cylinder (4) at the time immediately after the next is equal to that of c40. Because the amount of post-injection (c12 through c42) of each cylinder in the cycle immediately after the next is corrected by the above-mentioned processing, the output of the oxygen sensor 20 for detecting the exhaust gas emitted from each cylinder is equalized.

In the embodiment described above, the exhaust gas containing no hydrocarbon supplied by the post-injection flows through the oxygen sensor 20 during the specific period in which the post-injection is stopped to all the cylinders. Accordingly, while the oxygen sensor 20 normally detects the concentration of oxygen of the exhaust gas after burning the hydrocarbon supplied by the post-injection at the oxygen sensor 20, it can directly detect the concentration of oxygen within the exhaust gas containing no hydrocarbon supplied by post-injection. Thereby, the amount of post-injection may be estimated accurately based on the variation of the output of the oxygen sensor 20 before and after post-injection is stopped, and the command value of the post-injection amount may be corrected accurately.

It is noted that although the correction factor of the post-injection amount command value has been set again per cylinder in the seventh embodiment, the correction factor may be set again to the average value of the post-injection amount of all the cylinders.


[Eighth Embodiment]


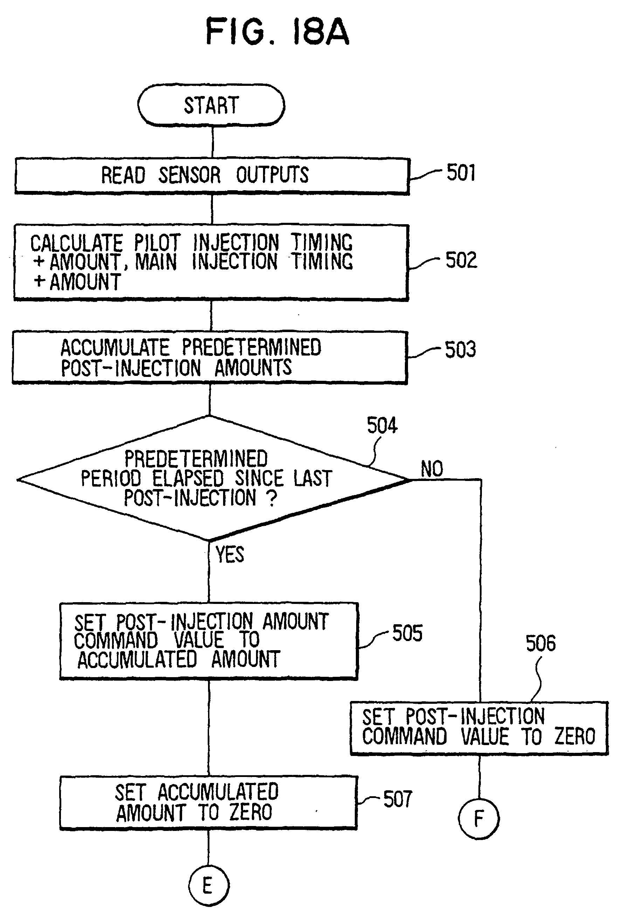

While the post-injection of all the cylinders has been stopped forcibly only for the specific period only when the correction factor k(i) of the post-injection amount command value is set again to measure the concentration of oxygen of the emission when no post-injection is executed, the post-injection is always executed for a time interval longer than the period determined from the oxygen sensor 20 to measure the concentration of oxygen of emission when no post-injection is executed in an eighth embodiment shown in FIGS. 18A through 19E. The system structure of this embodiment is the same as the structure explained in the sixth embodiment and shown in FIG. 13.

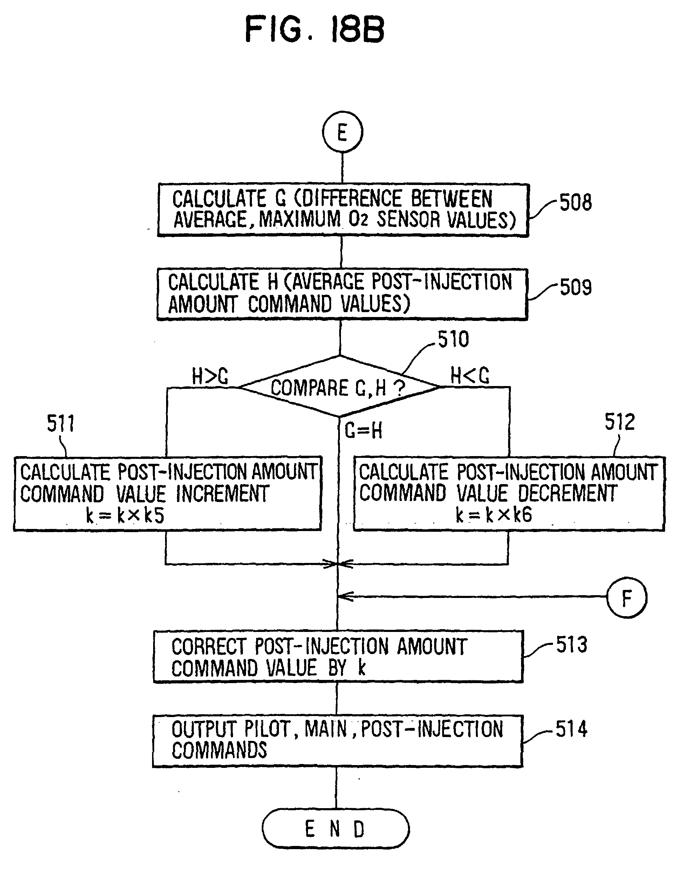

The contents of the injection control program executed in the eighth embodiment and shown in FIGS. 18A and 18B will be explained below. First, in Step 501, each signal output from the accelerator pedal sensor 26, the engine speed sensor 27, the air flow sensor 12 and the exhaust gas temperature sensor 21 are read to detect the operational state of the diesel engine 10 and correction factors k of the post-injection amount of all the cylinders stored in the RAM (not shown) of the ECU 25 are read. Step 502 then calculates command values of a pilot injection amount and its injection timing, command values of a main injection amount and its injection timing and command values of post-injection and its injection timing by the same processing with that in Step 302 in FIG. 14A.

After that, Step 503 accumulates the predetermined post-injection amounts every time the present program is activated to find a cumulative post-injection amount in order to calculate the post-injection amount corresponding to an elapsed time (crank angle) from the end of the post-injection in the last time to the present moment (cumulative post-injection amount = cumulative post-injection amount + post-injection amount). After that, Step 504 determines whether or not a "predetermined time" has passed since the post-injection of the last time. Here, the "predetermined time" is a time determined from the detection responsiveness of the oxygen sensor 20 and is set within a range of 20 ms to 500 ms or more preferably, 50 ms to 200 ms, for example.

When the "predetermined time" has not passed since the post-injection of the last time, the process advances from Step 504 to Step 506 to set the post-injection amount command value to zero and advances to Step 513 (i.e., without executing post-injection).

Then, the process advances from Step 504 to Step 505 at the moment when the "predetermined time" has passed since the post-injection of the last time to set the cumulative post-injection amount calculated in Step 503 at the post-injection amount command value. After that, Step 507 sets the post-injection amount to zero and Step 508 in FIG. 18B calculates the difference G between the average value and the maximum value of the oxygen sensor 20 output within the predetermined time. Then, the post-injection amount command values are averaged within the predetermined time to calculate the concentration of oxygen H to be changed in Step 509.

Then, Step 510 compares the difference G between the average value and the maximum value of the oxygen sensor 20 within the predetermined time calculated in Step 508 with the concentration of oxygen H to be changed by the average value of the post-injection amount command value within the predetermined time calculated in Step 509. When H > G, it is determined that the actual supply of HC is less than the amount of HC to be supplied by post-injection (commanded value). Then, Step 511 calculates a coefficient of increment k5 of the post-injection amount command value corresponding to the difference between H and G and to set the correction factor k of the post-injection amount command value again by multiplying the correction factor k(i) of the post-injection amount command value used the last time by the coefficient of increment k5 (k = k x k5). The process then advances to Step 513.

When H = G, it is determined that the amount of HC to be supplied by post-injection coincides with the actual supply of HC. Because the correction factor k of the post-injection amount command value used the last time can be used as is in this case, the process advances to Step 513 as it is.

When H < G, it is determined that the actual supply of HC is greater than the amount of HC to be supplied by post-injection. Then, Step 512 calculates a coefficient of decrement k6 of the post-injection amount command value corresponding to the difference between H and G and to set the correction factor k of the post-injection amount command value again by multiplying the correction factor k of the post-injection amount command value used the last time with the coefficient of decrement k6 (k = k x k6). The process then advances to Step 513.

Step 513 corrects the post-injection amount command value by the correction factor by multiplying the post-injection amount command value by the correction factor k (post-injection amount command value = post-injection amount command value x k). Step 514 then outputs commands (injection amount and injection timing) of pilot injection, main injection and post-injection to the fuel injection valve 14.

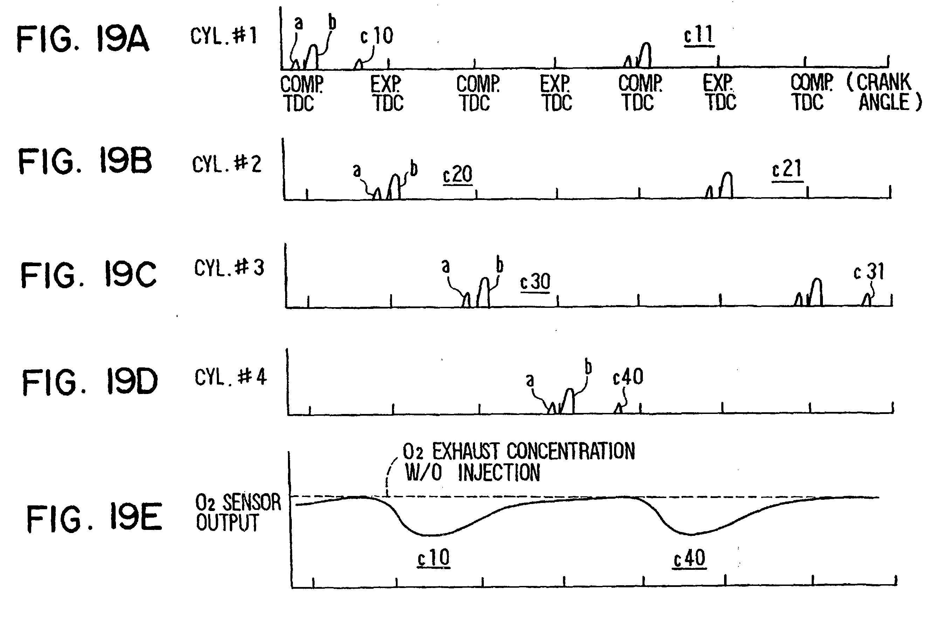

An operational example of the injection control program described above will be explained by using FIGS. 19A-19E. FIGS. 19A-19D are graphs showing fuel injection waveforms of first through fourth cylinders (1) through (4) and FIG. 19E is a graph of a waveform of an output signal of the oxygen sensor 20 during steady-state operation. Reference letter (a) in FIGS. 19A-19E denotes pilot injection, reference letter (b) main injection and reference letter (c10 through c31) post-injection. In FIG. 19E, a solid line indicates an actual sensor output and a broken line indicates the concentration of oxygen in exhaust gas when no post-injection is executed.

The pilot injection and main injection are executed in the same manner in all of cylinders (1) through (4), post-injection is not executed until the predetermined time which is determined from the detection responsiveness of the oxygen sensor 20 passes since when the post-injection is executed in cylinder (1) (c10), so that no post-injection is executed in cylinder (2) (c20) and cylinder (3) (c30) and post-injection is executed in cylinder (4) (c40) when the predetermined time has passed. Because post-injection is not executed until the predetermined time passes after being executed in cylinder (4), it is not executed in cylinder (1) (c11) and cylinder (2) (c21) and is executed in cylinder (3) (c31) when the predetermined time has passed. Similar processing is repeated thereafter.

The output signal of the oxygen sensor 20 drops every time post-injection is executed in cylinder (1), cylinder (4) and cylinder (3) and the fluctuation period of the output corresponds to 540° CA under this injection control. The exhaust gas containing no unburned hydrocarbon supplied by post-injection is emitted from the two cylinders and flows into the oxygen sensor 20 to be gas-exchanged within the oxygen sensor 20 until the next post-injection is executed since the post-injection has been executed, so that the output of the oxygen sensor 20 increases. Thereby, the output of the oxygen sensor 20 is maximized after the predetermined time determined from the detection responsiveness of the oxygen sensor 20 and the concentration of oxygen in exhaust gas while no post-injection is executed may be detected accurately by detecting the maximum value. It also allows the correction factor k of the post-injection amount command value to be set again and the post-injection command to be corrected accurately.

Although the post-injection amount correction factor k of all the cylinders has been set again in the eighth embodiment, the correction factor k(i) may be set again for every cylinder.

[Ninth Embodiment] (not according to the invention)

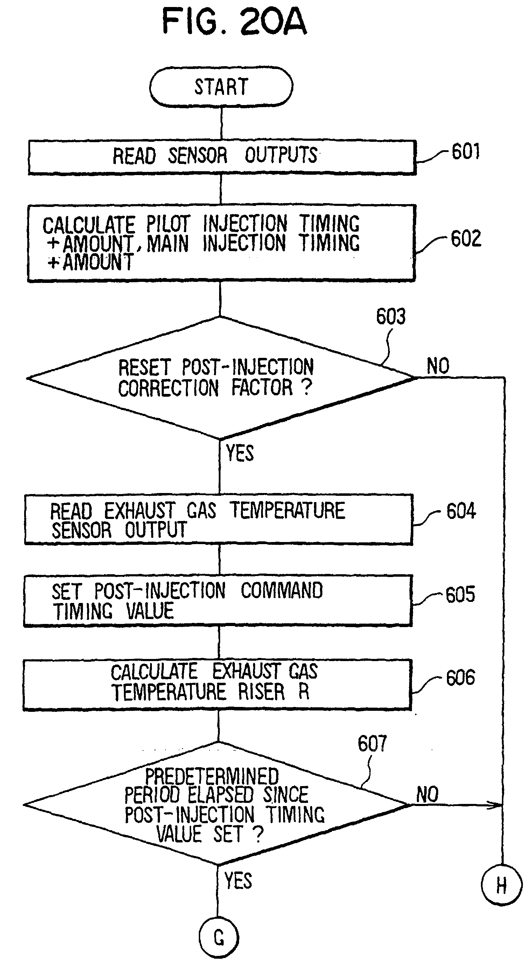

While the oxygen sensor 20 has been used as the sensor for detecting information reflecting the post-injection amount in the sixth through eighth embodiments described above, an exhaust gas temperature sensor on the upstream side of the $NO_x$ catalyst 19 is used as the sensor for detecting the information reflecting the post-injection amount to correct the command value of the post-injection amount based on the variation of the exhaust gas temperature corresponding to the amount of post-injection burned within the cylinders in the ninth embodiment shown in FIGS. 20A through 21E. The system structure of the ninth embodiment is the same as the structure of the sixth embodiment and shown in FIG. 13 except that element 20 is an exhaust gas temperature sensor, rather than the oxygen sensor 20 (hereinafter, although not specifically shown in the drawings, the exhaust gas temperature sensor will be denoted by the reference numeral 20').

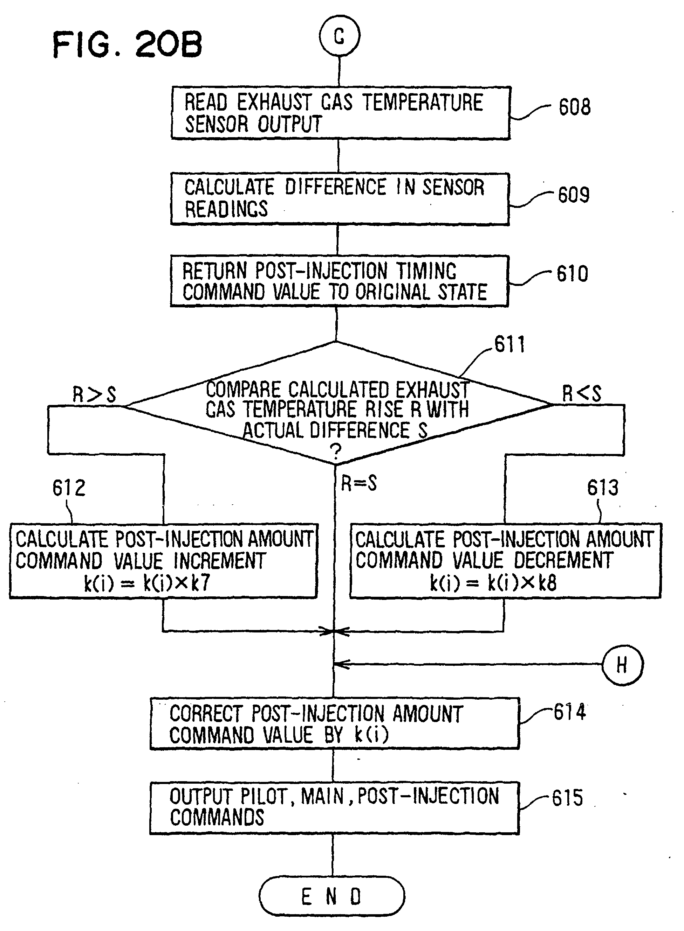

The contents of the injection control program executed in the ninth embodiment and shown in FIGS. 20A and 20B will be explained below. The processes in Steps 601 through 603 are the same with those in Steps 301 through 303 shown in FIG. 15A described above. When Step 603 determines that it is not necessary to set the correction factor k(i) (i = 1 to 4) again, the process advances to Step 614 in FIG. 20B described below. When it is determined to be necessary to set the coefficient again, Step 604 reads the output of the exhaust gas temperature sensor 20' when post-injection is executed at the normal post-injection timing (emission temperature at the normal post-injection timing).

After that, Step 605 advances and sets the post-injection timing command value to a predetermined value and then to calculate a temperature rise of the exhaust gas R from the quantity of heat of combustion of the post-injection amount command value in Step 606. Then, Step 607 determines whether or not a "predetermined time" has passed since the post-injection timing command value has been advanced and set. Here, the "predetermined time" is a time determined from the responsiveness of the exhaust gas temperature sensor 20' and is set within a range from 2 s to 10 s, for example. When the "predetermined time" has not passed yet since the post-injection timing command value has been advanced and set, the process advances to Step 614 in FIG. 20B described below. When the "predetermined time" has passed, Step 608 in FIG. 20B reads the output of the exhaust gas temperature sensor 20' when the post-injection timing command value has been advanced and set (the exhaust gas temperature when the post-injection timing has been advanced).

After Step 609 calculates the difference S between the output of the exhaust gas temperature sensor 20' at the normal post-injection timing read in Step 604 and the output of the exhaust gas temperature sensor 20' when the post-injection timing has been advanced read in Step 608 (actually measured temperature rise of the exhaust gas), Step 610 returns the post-injection timing command value to the original state before the advancement. After that, Step 611 compares the temperature rise of the exhaust gas R calculated from the quantity of heat of combustion of the post-injection amount command value in Step 606 with the difference S (actually measured temperature rise of the exhaust gas) of the outputs of the exhaust gas temperature sensor 20' calculated in Step 609. When R > S, it is determined that the actual HC supply is less than the amount of HC to be supplied by the post-injection (command value). Step 612 then calculates a coefficient of increment k7 (k7 > 1) of the post-injection amount command value corresponding to the difference between R and S to set the correction factor k(i) of the post-injection amount command value again by multiplying the correction factor k(i) (i = 1 to 4) of the post-injection amount command value used the last time with the coefficient of increment k7 (k(i) = k(i) x k7). Then, the process advances to Step 614.

When R = S, it is determined that the amount of HC to be supplied by the post-injection coincides with the actual supply of HC. In this case, the correction factor k(i) of the post-injection amount command value used the last time can also be used this time as is, so that the process advances to Step 614 as it is.

When R < S, it is determined that the actual supply of HC is greater than the amount of HC to be supplied by post-injection. Then, Step 613 calculates a coefficient of decrement k8 (k8 < 1) of the post-injection amount command value corresponding to the difference between R and S and sets the correction factor k(i) of the post-injection amount command value again by multiplying the correction factor k(i) of the post-injection amount command value used the last time with the coefficient of decrement k8 (k(i) = k(i) x k8). Then, the process advances to Step 614.

It is noted that the process advances to Step 614 also when the determination result is determined to be "NO" either in Step 603 or Step 607 described above.

Step 614 corrects the post-injection amount command value by the correction factor k(i) by multiplying the post-injection amount command value by the correction factor k(i) (post-injection amount command value = post-injection amount command value x k(i)). Step 615 then outputs commands (injection amount and injection timing) of pilot injection, main injection and post-injection to the fuel injection valve 14.

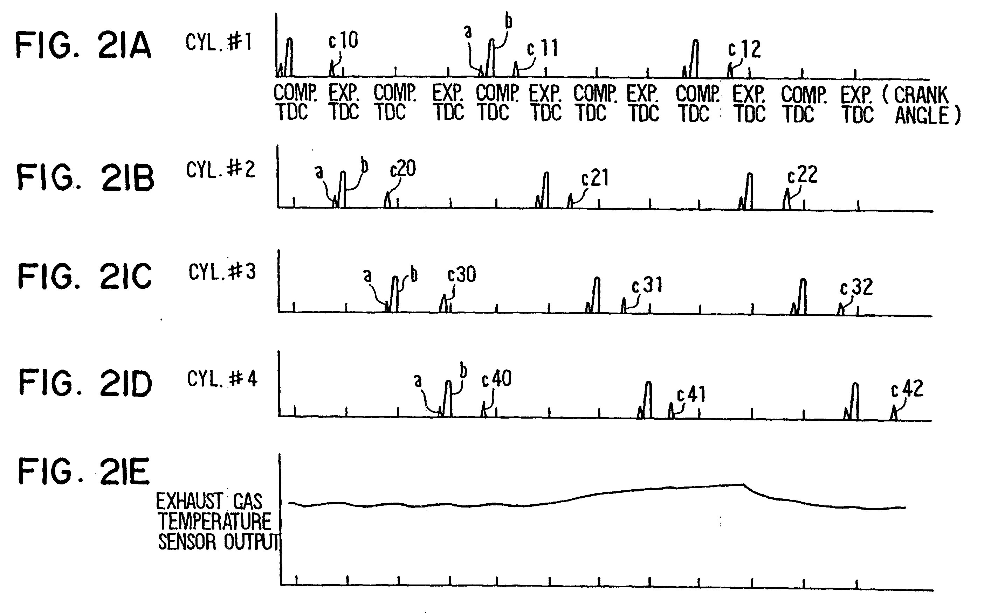

An operational example of the injection control program described above will be explained using FIGS. 21A-21E. FIGS. 21A-21D are graphs showing fuel injection waveforms of first through fourth cylinders (1) through (4) and FIG. 21E is a waveform of an output signal of the exhaust gas temperature sensor 20' during steady-state operation. Reference letter (a) in FIGS. 21A-21E denotes pilot injection, reference letter (b) main injection and reference letters (c10 through c42) post-injection. At first, post-injections c10 through c40 are executed in cylinders (1) through (4) at the normal injection timing and the temperature of the exhaust gas emitted from each cylinder at that time is detected. After that, the timing of post-injections from cylinder (1) to cylinder (4) (c11 to c41) is advanced and set and the post-injected fuel burns within the cylinders so that the exhaust gas temperature rises gradually and thus, the output of the exhaust gas temperature sensor 20' gradually rises.

Next, the variation of the exhaust gas temperature S caused by the combustion of post-injection within the cylinder for each cylinder is calculated from the difference S between the detected output of the exhaust gas temperature sensor 20' when the post-injection timing has been advanced and the output of the exhaust gas temperature sensor 20' at the normal post-injection timing. This variation S of the exhaust gas temperature is compared with the temperature rise of the exhaust gas R calculated from the post-injection amount command value to correct the post-injection amount command value. After that, the timing of the post-injections from cylinder (1) to cylinder (4) (c12 to c42) is returned to the original state before the advancement and the post-injection amount command value is corrected to be output to the fuel injection valve 14.

The fourth embodiment described above allows the post-injection amount to be estimated accurately from the variation of the output of the exhaust gas temperature sensor 20' before and after the advancement of the post-injection timing and the command value of the post-injection amount to be corrected accurately by advancing the post-injection timing more than the normal timing only by the specific period to burn the post-injection fuel within the cylinder.

It is noted that although the correction factor of the post-injection amount command value has been set again per cylinder in the ninth embodiment, the correction factor may be set again to the average value of the post-injection amounts of all the cylinders.

[Variations]

Although each of the embodiments described above has been used in connection with a four-cylinder diesel engine, needless to say, the number of cylinders is not limited to four and may be a different number. Further, the internal combustion engine to which the present invention can be applied is not limited only to a diesel engine and it may be applied to an intra-cylinder injection (direct injection) type gasoline engine as well.

Further, the EGR gas flow rate has been corrected based on the output signal (or its corrected value) of the oxygen sensor 20 in all of the embodiments described above; however, it is possible to arrange the system to correct the fuel injection amount or the intake air amount. The intake air amount may be corrected by controlling the aperture of the throttle valve in the intake pipe 11.

**Claims**

1. An exhaust emission control system for an internal combustion engine (10), the system comprising:

   control means (25) controlling operation of the engine (10) based on control variables;
   a plurality of fuel injecting means (14), each being for injecting fuel into a corresponding cylinder of the engine (10);
   a catalyst (19), in an exhaust passage (18) of the engine (10), for reducing and purifying nitrogen oxides within exhaust gas from the engine (10);
   an oxygen sensor (20), in the exhaust passage (18), for detecting a concentration of oxygen within the exhaust gas;
   operational state detecting means (12, 26, 27) detecting an operational state of the engine (10);
   injection control means (25) outputting a main injection command, for generating engine output, to the plurality of fuel injecting means (14) and outputting a post-injection command, for supplying hydrocarbon to the catalyst (19), to the fuel injecting means (14) of at least one cylinder based on the detected operational state;
   oxygen sensor correcting means (25) correcting an output of the oxygen sensor (20) based on the post-injection command; and
   engine control variable correcting means (25) correcting the control variables, to enhance a rate of purification of nitrogen oxides, based on the output of the oxygen sensor (20) corrected by the oxygen sensor correcting means (25).

2. The system of claim 1, wherein the oxygen sensor correcting means (25) comprises:

   exhaust gas flow rate estimating means (25) for estimating a flow rate of exhaust gas based on the detected operational state; and
   hydrocarbon concentration estimating means (25) for estimating a concentration of hydrocarbon within exhaust gas around the oxygen sensor (20) based on the estimated flow rate of exhaust gas and the post-injection command, and for correcting the output of the oxygen sensor (20) based on the estimated hydrocarbon concentration.

**3.** The system of claim 2, wherein:

the oxygen sensor correcting means (25) includes means for calculating a delay time until the exhaust gas reaches the oxygen, sensor (20) based on the detected operational state; and
the hydrocarbon concentration estimating means is for estimating the concentration of hydrocarbon within the exhaust gas around the oxygen sensor (20) at a given moment based on the flow rate of exhaust gas before the delay time and the post-injection command.

**4.** The system according to one of claims 1 to 3 wherein
the injection control means (25) is for outputting the post-injection command in a period longer than a period based on the detection responsiveness of the oxygen sensor (20).

**5.** The system of claim 4, wherein the injection control means (25) is for correcting the post-injection command and outputting it to the fuel injecting means (14) of at least one cylinder based on a variation of the output of the oxygen sensor (20) within a predetermined time which is longer than a period based on the detection responsiveness of the oxygen sensor (20).

**6.** The system according to any of claims 1 to 5 wherein
the oxygen sensor (20) is disposed in an exhaust manifold (17) of a cylinder of the engine (10) at a position most distant from the specific cylinder in which the post-injection is executed.

**7.** The system of one of claims 1 through 6, further comprising an exhaust gas recirculating passage (22), for recirculating part of the exhaust gas to an induction system (11) of the engine (10), connected to an exhaust manifold (17) of a cylinder at a position most distant from the specific cylinder in which the post-injection is executed.

**8.** The system of one of claims 1 through 6, further comprising an exhaust gas recirculating passage (22), for recirculating part of the exhaust gas to an induction system (11) of the engine (10), connected to the exhaust passage (18) on a downstream side of the catalyst (19).

**9.** The system according to any of claims 1 to 8 wherein a catalyst (34) for recirculated exhaust gas is provided in the exhaust gas recirculating passage (22), for reducing and purifying nitrogen oxides within the recirculated exhaust gas.

**10.** A method of reducing and purifying nitrogen oxides within exhaust gas emitted from an internal combustion engine (10), the method comprising:

detecting an operational state of the engine (10);
executing, based on the detected operational state, main injection by issuing a main injection command for generating engine output to a plurality of fuel injectors (14) of each cylinder of the engine (10) as well as executing post-injection by issuing a post-injection command, for supplying hydrocarbon to the catalyst (19), to fuel injecting means (14) of at least one cylinder;
detecting a concentration of oxygen within the exhaust gas using an oxygen sensor (20); and
correcting an output of the oxygen sensor (20) based on the post-injection command and correcting control variables of the engine (10) to enhance a rate of nitrogen oxide purification based on the corrected output.

**11.** The system according to one of claims 1 to 9 further comprising a target oxygen concentration calculating means (25) for calculating a target concentration of oxygen within the exhaust gas based on the detected operational state; the oxygen concentration correcting means (25) correcting the target concentration of oxygen based on the post-injection command.

**12.** The system of claim 11, wherein:

the oxygen concentration correcting means (25) includes exhaust gas flow rate estimating means (25) for estimating the flow rate of exhaust gas based on the detected operational state; and
hydrocarbon concentration estimating means (25) for estimating the concentration of hydrocarbon within exhaust gas around the oxygen sensor (20) based on the estimated flow rate of exhaust gas and the post-injection command and correcting either the output of the oxygen sensor (20) or the target oxygen concentration based on the estimated concentration of hydrocarbon.

**13.** The system of claim 12, wherein:

the oxygen concentration correcting means (25) includes means (25) for calculating a delay time until the exhaust gas reaches the oxygen sensor (20) based on the detected operational state; and

the hydrocarbon concentration estimating means (25) is for estimating the concentration of hydrocarbon within the exhaust gas around the oxygen sensor (20) at a given moment based on the flow rate of exhaust gas before the delay time and the post-injection command.

**14.** The system according to any of claims 1 to 9 and 11 to 13

wherein the injection control means (25) is for outputting the post-injection command in a period longer than a period based on the detection responsiveness of the oxygen sensor (20).

**15.** The system according to any of claims 1 to 9 and 11 to 14

wherein the oxygen sensor (20) is disposed in an exhaust manifold (17) of a cylinder at a position most distant from the specific cylinder in which the post-injection is executed.

**16.** The method of claim 10 comprising further calculating the target concentration of oxygen within the exhaust gas from the detected operational state and controlling the engine (10) based on the control variables.

**Patentansprüche**

**1.** Abgasemissionssteuerungssystem für einen Verbrennungsmotor (10), wobei das Syszem aufweist:

eine Steuerungseinrichtung (25) zum Steuern des Betriebs des Motors (10) auf Grundlage von Steuerungsgrößen;

eine Vielzahl von Kraftstoffeinspritzeinrichtungen (14), von denen jede zur Kraftstoffeinspritzung in einen entsprechenden Zylinder des Motors (10) vorgesehen ist,

einen Katalysator (19), der in einem Abgaskanal (18) des Motors (10) angeordnet ist, zum Reduzieren und zum Reinigen von Stickstoffoxiden in dem Abgas des Motors (10),

einen Sauerstoffsensor (20), der in dem Abgaskanal (18) angeordnet ist, zum Erfassen einer Sauerstoffkonzentration in dem Abgas,

eine Einrichtung zum Erfassen des Betriebszustandes (12, 26, 27), die einen Betriebszustand des Motors (10) erfaßt,

eine Einspritzsteuerungseinrichtung (25), die zur Erzeugung einer Motorausgabe einen Haupteinspritzbefehl an die Vielzahl der Kraftstoffeinspritzeinrichtungen (14) ausgibt, und die zur Lieferung von Kohlenwasserstoff an den Katalysator (19) einen Nacheinspritzbefehl an die Kraftstoffeinspritzeinrichtung (14) wenigstens eines Zylinders auf Grundlage des erfaßten Betriebszustandes ausgibt,

eine Korrektureinrichtung (25) des Sauerstoffsensors, die eine Ausgabe des Sauerstoffsensors (20) auf Grundlage des Nacheinspritzbefehl korrigiert, und

eine Korrektureinrichtung (25) der Motorsteuerungsgröße, die die Steuerungsgrößen auf Grundlage der Ausgabe des Sauerstoffsensors (20), die durch die Korrektureinrichtung (25) des Sauerstoffsensors korrigiert wurde, korrigiert, um einen Reinigungsgrad der Stickstoffoxide zu erhöhen.

**2.** Das System nach Patentanspruch 1, wobei die Korrektureinrichtung (25) des Sauerstoffsensor hat:

eine Schätzeinrichtung (25) des Abgasdurchfluß zum Schätzen eines Durchflusses des Abgases auf Grundlage des erfassten Betriebszustandes, und

eine Schätzeinrichtung (25) der Kohlenwasserstoffkonzentration zum Schätzen einer Konzentration des Kohlenwasserstoffs in dem Abgas um den Sauerstoffsensor (20) auf Grundlage des geschätzten Abgasdurchfluß und dem Nacheinspritzbefehl, und zur Korrektur der Ausgabe des Sauerstoffsensors (20) auf Grundlage der geschätzten Kohlenwasserstoffkonzentration.

**3.** Das System nach Patentanspruch 2, wobei

die Korrektureinrichtung des Sauerstoffsensors (25) eine Einrichtung zur Berechnung einer Verzögerungszeit bis das Abgas den Sauerstoffsensor (20) erreicht auf Grundlage des erfaßten Betriebszustandes hat, und

die Schätzeinrichtung der Kohlenwasserstoffkonzentration zum Schätzen der Kohlenwasserstoffkonzentration in dem Abgas um den Sauerstoffsensor (20) in einem gegebenen Moment auf Grundlage des Abgasdruchflusses vor der Verzögerungszeit und vor dem Nacheinspritzbefehl dient.

4. Das System nach einem der Patentansprüche 1 bis 3, wobei die Einspritzsteuerungseinrichtung (25) zur Ausgabe des Nacheinspritzbefehls in einer Periode vorgesehen ist, die länger als eine Periode ist, die auf der Ansprechempfindlichkeit der Erfassung des Sauerstoffsenors (20) basiert.

5. Das System nach Patentanspruch 4, wobei die Einspritzsteuerungseinrichtung (25) vorgesehen ist zur Korrektur des Nacheinspritzbefehls und zur Ausgabe von diesem an die Kraftstoffeinspritzeinrichtung (14) wenigstens eines Zylinders auf Grundlage einer Schwankung der Ausgabe des Sauerstoffsensors (20) in einer vorbestimmten Zeit, die länger ist als eine Zeit, die auf der Ansprechempfindlichkeit der Erfassung des Sauerstoffsensors (20) basiert.

6. Das System nach einem der Patentansprüche 1 bis 5, wobei der Sauerstoffsensor (20) in einem Auspuffkrümmer (17) eines Zylinders des Motors (10) an einer Position angeordnet ist, die der größten Entfernung von dem speziellen Zylinder entspricht, in dem die Nacheinspritzung ausgeführt wird.

7. Das System nach einem Patentansprüche 1 bis 6, des Weiteren mit einem Abgasrückführungskanal (22) zum Rückführen eines Teils des Abgases an ein Induktionssystem (11) des Motors (10), der mit einem Auspuffkrümmer (17) eines Zylinders an einer Position verbunden ist, die der größten Entfernung von dem speziellen Zylinder entspricht, in dem die Nacheinspritzung ausgeführt wird.

8. Das System nach einem der Patentansprüche 1 bis 6, des Weiteren mit einem Abgasrückführungskanal (22) zum Rückführen eines Teils des Abgases an ein Induktionssystem (11) des Motors (10), der an einer stromabwärts gelegenden Seite des Katalysators (19) mit dem Abgasführungskanal (18) verbunden ist.

9. Das System nach einem der Patentansprüche 1 bis 8, wobei ein Katalysator (34) für rückgeführtes Abgas im Abgasrückführungskanal (22) zur Reduzierung und Reinigung von Stickstoffoxiden in dem rückgeführten Abgas vorgesehen ist.

10. Ein Verfahren zum Reduzieren und Reinigen von Stickstoffoxiden im Abgas, das von einem Verbrennungsmotor (10) ausgestoßen wird, wobei das Verfahren aufweist:

Erfassen eines Betriebszustandes des Motors (10),
Ausführen einer Haupteinspritzung auf Grundlage des erfaßten Betriebszustandes durch Ausgabe eines Haupteinspritzbefehls zur Erzeugung einer Motorausgabe an eine Vielzahl von Kraftstoffeinspritzereinrichtungen (14) eines jeden Zylinders des Motors (10), sowie zur Ausführung einer Nacheinspritzung durch Ausgabe eines Nacheinspritzbefehls an eine Kraftstoffeinspritzeinrichtung (14) wenigstens eines Zylinders zur Lieferung von Kohlenwasserstoff an den Katalysator (19),
Erfassen einer Sauerstoffkonzentration in dem Abgas durch Verwendung eines Sauerstoffsensors (20), und Korrektur einer Ausgabe des Sauerstoffsensors (20) auf Grundlage des Nacheinspritzbefehls und Korrektur von Steuerungsgrößen des Motors (10), um einen Reinigungsgrad der Stickstoffoxide auf Grundlage der Korrekturausgabe zu erhöhen.

11. Das System nach einem der Patentansprüche 1 bis 9 des Weiteren mit
einer Berechnungseinrichtung (25) der Sollsauerstoffkonzentration zur Berechnung einer Sollkonzentration des Sauerstoffs in dem Abgas auf Grundlage des erfaßten Betriebszustandes, wobei
die Einrichtung der Sauerstoffkonzentration (25) die Sollkonzentration des Sauerstoff auf Grundlage des Nacheinspritzbefehls korrigiert.

12. Das System nach Patentanspruch 11, wobei
die Korrektureinrichtung (25) der Sauerstoffkonzentration eine Schätzeinrichtung (25) des Abgasdurchflusses zum Schätzen des Abgasdurchflusses auf Grundlage des erfaßten Betriebszustandes, und
eine Schätzeinrichtung (25) der Kohlenwasserstoffkonzentration zum Schätzen der Kohlenwasserstoffkonzentration in dem Abgas um den Sauerstoffsensor (20) auf Grundlage des geschätzen Abgasdurchflusses und dem Nacheinspritzbefehl hat, und diese entweder die Ausgabe des Sauerstoff sensors (20) oder die Sollsauerstoffkonzentration auf Grundlage der geschätzten Kohlenwasserstoffkonzentration korrigiert.

13. Das System nach Patentanspruch 12, wobei
die Korrektureinrichtung (25) der Sauerstoffkonzentration eine Einrichtung (25) zur Berechnung einer Verzögerungszeit bis das Abgas den Sauerstoffsensor (20) erreicht auf Grundlage des erfaßten Betriebszustandes hat, und

die Schätzeinrichtung (25) der Kohlenwasserstoffkonzentration vorgesehen ist zum Schätzen einer Kohlenwasserstoffkonzentration in dem Abgas um den Sauerstoffsensor (20) in einem gegebenen Moment auf Grundlage des Abgasdurchflusses vor der Verzögerungszeit und dem Nacheinspritzbefehl.

14. Das System nach einem der Patentansprüche 1 bis 9 und 11 bis 13, wobei die Einspritzsteuerungseinrichtung (25) vorgesehen ist zur Ausgabe des Nacheinspritzbefehls in einer Periode länger als eine Periode, die auf der Ansprechempfindlichkeit der Erfassung des Sauerstoffsensors (20) basiert.

15. Das System nach einem der Patentansprüche 1 bis 9 und 11 bis 14, wobei der Sauerstoffsensor (20) in einem Auspuffkrümmer (17) eines Zylinders an einer Position angeordnet ist, die der größten Entfernung von dem speziellen Zylinder, in dem die Nachzündung ausgeführt wird, entspricht.

16. Das Verfahren nach Patentanspruch 10, das des Weiteren die Berechnung der Zielkonzentration des Sauerstoffs in dem Abgas aus dem erfaßten Betriebszustand und einer Steuerung des Motors (10) auf Grundlage der Steuerungsgrößen aufweist.

## Revendications

1. Système de commande d'émission d'échappement pour un moteur à combustion interne (10), le système comprenant :

un moyen de commande (25) commandant le fonctionnement du moteur (10) sur la base de variables de commande ;

une pluralité de moyens d'injection de carburant (14), chacun étant destiné à injecter du carburant dans un cylindre correspondant du moteur (10) ;

un catalyseur (19), dans un passage d'échappement (18) du moteur (10), destiné à réduire et purifier les oxydes d'azote au sein du gaz d'échappement provenant du moteur (10) ;

un capteur d'oxygène (20), dans le passage d'échappement (18), destiné à détecter une concentration en oxygène au sein des gaz d'échappement ;

un moyen de détection d'état de fonctionnement (12, 26, 27) détectant un état de fonctionnement du moteur (10) ;

un moyen de commande d'injection (25) sortant un ordre d'injection principal pour générer une sortie du moteur, à la pluralité de moyens d'injection de carburant (14) et sortant un ordre de post-injection, pour délivrer des hydrocarbures au catalyseur (19), aux moyens d'injection de carburant (14) d'au moins un cylindre sur la base de l'état de fonctionnement détectée ;

un moyen de correction de capteur d'oxygène (25) corrigeant une sortie du capteur d'oxygène (20) sur la base de l'ordre de post-injection ; et

un moyen de correction de variable de commande du moteur (25) corrigeant les variables de commande, pour améliorer un taux de purification des oxydes d'azote, sur la base de la sortie du capteur d'oxygène (20) corrigée par le moyen de correction de capteur d'oxygène (25).

2. Système selon la revendication 1, dans lequel le moyen de correction du capteur d'oxygène (25) comprend :

un moyen d'estimation de débit de gaz d'échappement (25) pour estimer un débit de gaz d'échappement sur la base de l'état de fonctionnement détecté ; et

un moyen d'estimation de concentration en hydrocarbure (25) pour estimer une concentration en hydrocarbure au sein des gaz d'échappement autour du capteur d'oxygène (20) sur la base du débit estimé du gaz d'échappement et de l'ordre de post-injection, et pour corriger la sortie du capteur d'oxygène (20) sur la base de la concentration en hydrocarbure estimée.

3. Système selon la revendication 2, dans lequel :

le moyen de correction de capteur d'oxygène (25) comprend un moyen pour calculer un temps de retard jusqu'à que le gaz d'échappement atteigne le capteur d'oxygène (20) sur la base de l'état de fonctionnement détecté ; et

le moyen d'estimation de concentration en hydrocarbure est destiné à estimer la concentration en hydrocarbure au sein du gaz d'échappement autour du capteur d'oxygène (20) à un moment donné sur la base du débit du gaz d'échappement avant le temps de retard et l'ordre de post-injection.

4. Système selon l'une quelconque des revendications 1 à 3, dans lequel
le moyen de commande d'injection (25) est destiné à sortir l'ordre de post-injection dans une période plus longue d'une période basée sur la sensibilité de fonctionnement de détection du capteur d'oxygène (20).

5. Système selon la revendication 4, dans lequel le moyen de commande d'injection (25) est destiné à corriger l'ordre de post-injection et à la sortir au moyen d'injection de carburant (14) d'au moins un cylindre sur la base d'une variation de la sortie du capteur d'oxygène (20) pendant un temps prédéterminé qui est plus long d'une période basée sur la sensibilité de fonctionnement de détection du capteur d'oxygène (20).

6. Système selon l'une quelconque des revendications 1 à 5, dans lequel
le capteur d'oxygène (20) est disposé dans un collecteur d'échappement (17) d'un cylindre du moteur (10) à une position la plus distance du cylindre spécifique dans lequel la post-injection est exécutée.

7. Système selon l'une quelconque des revendications 1 à 6, comprenant, en outre, un passage de recyclage des gaz d'échappement (22), pour recycler une partie du gaz d'échappement vers un système d'induction (11) du moteur (10), raccordé à un collecteur d'échappement (17) d'un cylindre à une position la plus distance du cylindre spécifique dans lequel la post-injection est exécutée.

8. Système selon l'une des revendications 1 à 6, comprenant, en outre, un passage de recyclage des gaz d'échappement (22), pour recycler une partie du gaz d'échappement vers un système d'induction (11) du moteur (10), raccordé à un passage d'échappement (18) sur un côté aval du catalyseur (19).

9. Système selon l'une quelconque des revendications 1 à 8, dans lequel un catalyseur (34) pour les gaz d'échappement recyclés est disposé dans le passage de recyclage des gaz d'échappement (22), afin de réduire et purifier les oxydes d'azote au sein du gaz d'échappement recyclé.

10. Système de réduction et de purification d'oxydes d'azote au sein d'un gaz d'échappement émis à partir d'un moteur à combustion interne (10), le procédé comprenant les étapes consistant à :

détecter un état de fonctionnement du moteur (10) ;

exécuter, sur la base de l'état de fonctionnement détecté, une injection principale en émettant un ordre d'injection principal pour générer une sortie du moteur à une pluralité d'injecteurs de carburant (14) de chaque cylindre du moteur (10) de même que l'exécution de la post-injection en émettant un ordre de post-injection pour délivrer des hydrocarbures au catalyseur (19), au moyen d'injection de carburant (14) d'au moins un cylindre ;

détecter une concentration en oxygène au sein du gaz d'échappement en utilisant un capteur d'oxygène (20) ; et

corriger une sortie du capteur d'oxygène (20) sur la base de l'ordre de post-injection et des variables de commande de correction du moteur (10) pour améliorer un taux de purification d'oxyde d'azote sur la base de la sortie corrigée.

11. Système selon l'une quelconque des revendications 1 à 9, comprenant, en outre, un moyen de calcul de concentration en oxygène cible (25) pour calculer une concentration cible en oxygène au sein du gaz d'échappement sur la base de l'état de fonctionnement détecté ; le moyen de correction de concentration en oxygène (25) corrigeant la concentration cible en oxygène sur la base de l'ordre de post-injection.

**12.** Système selon la revendication 11, dans lequel :

le moyen de correction de concentration en oxygène (25) comporte un moyen d'estimation de débit de gaz d'échappement (25) pour estimer le débit de gaz d'échappement sur la base de l'état de fonctionnement détecté ; et

un moyen d'estimation de concentration en hydrocarbure (25) pour estimer la concentration en hydrocarbure au sein du gaz d'échappement autour du capteur d'oxygène (20) sur la base du débit estimé du gaz d'échappement et de l'ordre de post-injection et corrige soit la sortie du capteur d'oxygène (20) soit la concentration en oxygène cible sur la base de la concentration estimée en hydrocarbure.

**13.** Système selon la revendication 12, dans lequel :

le moyen de correction de concentration en oxygène (25) comporte un moyen (25) pour calculer un temps de retard jusqu'à ce que le gaz d'échappement atteigne le capteur d'oxygène (20) sur la base de l'état de fonctionnement détecté ; et

le moyen d'estimation de concentration en hydrocarbure (25) est destiné à estimer la concentration en hydrocarbure au sein du gaz d'échappement autour du capteur d'oxygène (20) à un moment donné sur la base du débit du gaz d'échappement avant le temps de retard et l'ordre de post-injection.

**14.** Système selon l'une quelconque des revendications 1 à 9 et 11 à 13 dans lequel le moyen de commande d'injection (25) est destiné à sortir l'ordre de post-injection dans une période plus longue qu'une période basée sur la sensibilité de fonctionnement de détection du capteur d'oxygène (20).

**15.** Système selon l'une quelconque des revendications 1 à 9 et 11 à 15 dans lequel le capteur d'oxygène (20) est disposé dans un collecteur d'échappement (17) d'un cylindre à une position la plus distante du cylindre spécifique dans lequel la post-injection est exécutée.

**16.** Procédé selon la revendication 10 comprenant, en outre, l'étape consistant à calculer la concentration cible en oxygène au sein du gaz d'échappement à partir de l'état de fonctionnement détecté et l'étape consistant à commander le moteur (10) sur la base des variables de commande.

# FIG. 1

ACCELERATION PEDAL SENSOR — 26

ENGINE ROT. SPEED SENSOR — 27

ECU — 25

AIRFLOW SENSOR — 12

EGR VALVE — 23

EGR VALVE CONTROL — 24

EP 0 844 380 B1

# FIG. 2

```
            ┌─────────────┐
            │    START    │
            └─────────────┘
                   │
    ┌──────────────────────────────┐
    │     READ  SENSOR  OUTPUTS     │──── 101
    └──────────────────────────────┘
                   │
    ┌──────────────────────────────┐
    │  CALCULATE PILOT  INJECTION   │
    │  TIMING + AMOUNT, MAIN        │──── 102
    │  INJECTION TIMING + AMOUNT    │
    └──────────────────────────────┘
                   │
    ┌──────────────────────────────┐
    │    ESTIMATE  POST-INJECTION   │──── 103
    │       TIMING + AMOUNT         │
    └──────────────────────────────┘
                   │
    ┌──────────────────────────────┐
    │     OUTPUT PILOT, MAIN +      │──── 104
    │    POST-INJECTION  SIGNALS    │
    └──────────────────────────────┘
                   │
    ┌──────────────────────────────┐
    │ DETECT  EXHAUST GAS FLOW RATE,│──── 105
    │ FIRST AND SECOND GAS TRAVEL   │
    │           TIMES               │
    └──────────────────────────────┘
                   │
    ┌──────────────────────────────┐
    │ ESTIMATE HYDROCARBON          │──── 106
    │ CONCENTRATION                 │
    └──────────────────────────────┘
                   │
    ┌──────────────────────────────┐
    │ AVERAGE O₂ SENSOR OUTPUT      │──── 107
    │ OVER  180°CA                  │
    └──────────────────────────────┘
                   │
    ┌──────────────────────────────┐
    │    CORRECT  AVERAGED SIGNAL   │──── 108
    └──────────────────────────────┘
                   │
    ┌──────────────────────────────┐
    │  COMPARE CORRECTED SIGNAL     │──── 109
    │  WITH TARGET CONCENTRATION    │
    └──────────────────────────────┘
                   │
            ┌─────────────┐
            │    E N D     │
            └─────────────┘
```

## FIG. 3A

CYL. #1

PILOT INJ.
MAIN INJ.
POST-INJ.

COMP. TDC     EXP. TDC     COMP. TDC     EXP. TDC

## FIG. 3B

CYL. #2

EXP. TDC     COMP. TDC     EXP. TDC     COMP. TDC

## FIG. 3C

CYL. #3

PILOT INJ.
MAIN INJ.
POST-INJ.

COMP. TDC     EXP. TDC     COMP. TDC     EXP. TDC

## FIG. 3D

CYL. #4

EXP. TDC     COMP. TDC     EXP. TDC     COMP. TDC

## FIG. 4

180°CA

$O_2$ CONCENTRATION
W/O POST-INJ.

$O_2$ SENSOR
OUTPUT

$O_2$ SENSOR OUTPUT

TIME (CRANK ANGLE)

EP 0 844 380 B1

FIG. 5

```
                    ┌─────────────┐
                    │    START    │
                    └──────┬──────┘
                           │
201 ──┐     ┌──────────────┴──────────────┐
      └──── │      READ SENSOR OUTPUTS     │
            └──────────────┬──────────────┘
                           │
202 ──┐     ┌──────────────┴──────────────┐
      └──── │  CALCULATE PILOT INJECTION   │
            │  AMOUNT + TIMING, MAIN IN-   │
            │  JECTION AMOUNT TIMING       │
            └──────────────┬──────────────┘
                           │
203 ──┐     ┌──────────────┴──────────────┐
      └──── │  ESTIMATE POST-INJECTION     │
            │  TIMING + AMOUNT             │
            └──────────────┬──────────────┘
                           │
204 ──┐     ┌──────────────┴──────────────┐
      └──── │  ACCUMULATE PREDET. POST-    │
            │  INJECTION AMOUNTS           │
            └──────────────┬──────────────┘
                           │
205 ──┐     ┌──────────────┴──────────────┐
      └──── │  OUTPUT PILOT, MAIN          │
            │  INJECTION COMMANDS          │
            └──────────────┬──────────────┘
                           │
206 ──┐          ◇─────────┴─────────◇      NO
      └──────── PREDETERMINED PERIOD ────────────┐
               ELAPSED SINCE LAST               │
                POST-INJECTION ?                │
                           │ YES                │
207 ──┐     ┌──────────────┴──────────────┐     │
      └──── │  OUTPUT POST-INJECTION COMMAND│    │
            └──────────────┬──────────────┘     │
                           │                    │
208 ──┐     ┌──────────────┴──────────────┐     │
      └──── │  CLEAR CUMULATIVE POST-      │     │
            │  INJECTION AMOUNT            │     │
            └──────────────┬──────────────┘     │
                           │                    │
209 ──┐          ◇─────────┴─────────◇   NO     │
      └──────── O₂ SENSOR OUTPUT ──────────────→│
               REACHED MAXIMUM VALUE,           │
                   STABILIZED ?                 │
                           │ YES                │
210 ──┐     ┌──────────────┴──────────────┐     │
      └──── │  COMPARE O₂ SENSOR OUTPUT    │     │
            │  WITH TARGET CONCENTRATION   │     │
            └──────────────┬──────────────┘     │
                           │                    │
211 ──┐     ┌──────────────┴──────────────┐     │
      └──── │  COMPARE MAXIMUM, MINIMUM    │     │
            │  O₂ CONCENTRATIONS           │     │
            └──────────────┬──────────────┘     │
                           │←───────────────────┘
                    ┌──────┴──────┐
                    │    E N D    │
                    └─────────────┘
```

**FIG. 6A**

**FIG. 6B**

**FIG. 6C**

**FIG. 6D**

**FIG. 7**

# FIG. 8

ACCELERATION PEDAL SENSOR 26

ENGINE ROT SPEED SENSOR 27

ECU 25

AIRFLOW SENSOR 12

EGR VALVE 23

EGR VALVE CONTROL 24

16

10

13

11

15

17a

17b

17c

17d

18

19

21

14

20

22

31

EP 0 844 380 B1

28

## FIG. 9A

CYL.#1

PILOT INJ.
MAIN INJ.
POST-INJ.

PILOT INJ.
MAIN INJ.
POST-INJ.

COMP. TDC | EXP. TDC | COMP. TDC | EXP. TDC | COMP. TDC | EXP. TDC | COMP. TDC

( CRANK ANGLE )

## FIG. 9B

CYL.#2

EXP. TDC | COMP. TDC | EXP. TDC | COMP. TDC | EXP. TDC | COMP. TDC | EXP. TDC

## FIG. 9C

CYL.#3

PILOT INJ.
MAIN INJ.

COMP. TDC | EXP. TDC | COMP. TDC | EXP. TDC | COMP. TDC | EXP. TDC | COMP. TDC

## FIG. 9D

CYL.#4

EXP. TDC | COMP. TDC | EXP. TDC | COMP. TDC | EXP. TDC | COMP. TDC | EXP. TDC

# FIG. 10

FIG. 11

# FIG. 12

ACCELERATION PEDAL SENSOR — 26

27

ENGINE ROT SPEED SENSOR

ECU — 25

AIRFLOW SENSOR

EGR VALVE

EGR VALVE CONTROL

① ② ③ ④

EP 0 844 380 B1

FIG. 13

ACCELERATION PEDAL SENSOR — 26

ECU — 25

ENGINE ROT SPEED SENSOR — 27

AIRFLOW SENSOR

16

10

13

17

12  11

1  2  3  4

14

20

18

19

21

EP 0 844 380 B1

# FIG. 14A

START

READ SENSOR OUTPUTS — 301

CALCULATE PILOT INJECTION TIMING
+AMOUNT, MAIN INJECTION TIMING
+AMOUNT — 302

RESET POST-INJECTION
CORRECTION FACTOR ? — 303  NO → (B)

YES

CALCULATE $O_2$ CONCENTRATION W/O
POST-INJECTION — 304

READ $O_2$ SENSOR OUTPUT — 305

AVERAGE $O_2$ SENSOR OUTPUT
OVER 180° CA — 306

(A)

# FIG. 14B

A

307 — COMPARE AVERAGE $O_2$ CONCENTRATION AND $O_2$ CONCENTRATION WITH POST-INJECTION ?

B > A

B < A

B = A

308

CALCULATE POST-INJECTION AMOUNT COMMAND VALUE INCREMENT
$k(i) = k(i) \times k7$

309

CALCULATE POST-INJECTION AMOUNT COMMAND VALUE DECREMENT
$k(i) = k(i) \times k2$

B

CORRECT POST-INJECTION AMOUNT COMMAND VALUE BY $k(i)$ — 310

OUTPUT PILOT, MAIN, POST-INJECTION COMMANDS — 311

E N D

EP 0 844 380 B1

FIG. 15A CYL.#1

a b c10 c11

COMP. TDC | EXP. TDC | COMP. TDC | EXP. TDC | COMP. TDC | EXP. TDC | COMP. TDC | EXP. TDC (CRANK ANGLE)

FIG. 15B CYL.#2

a b c20 c21

FIG. 15C CYL.#3

a b c30 c31

FIG. 15D CYL.#4

a b c40 c41

FIG. 15E O₂ SENSOR OUTPUT

O₂ EXHAUST CONCENTRATION A WITH POST-INJ.

c10  c20  c30  c40  c11  c21  c31

# FIG. 16A

START

READ SENSOR OUTPUTS — 401

CALCULATE PILOT INJECTION TIMING
+AMOUNT, MAIN INJECTION TIMING
+AMOUNT — 402

403
RESET POST-INJECTION
CORRECTION FACTOR ? — NO

YES

READ O₂ SENSOR OUTPUT — 404

SET POST-INJECTION
COMMAND VALVE TO ZERO — 405

406
PREDETERMINED PERIOD
ELAPSED SINCE POST-
INJECTION STOPPED ? — NO

YES

READ O₂ SENSOR OUTPUT — 407

C    D

# FIG. 16B

```
(C)
  │
┌──────────────────────────────────────┐
│ CALCULATE E (DIFFERENCE IN O₂ SENSOR  │──408
│ OUTPUT WITH, W/O POST-INJECTION)      │
└──────────────────────────────────────┘
  │
┌──────────────────────────────────────┐
│ CALCULATE F (EXHAUST FLOW RATE, HC    │──409
│ CONCENTRATION AND O₂ CONCENTRATION)   │
└──────────────────────────────────────┘
```

$E$ (DIFFERENCE IN $O_2$ SENSOR OUTPUT WITH, W/O POST-INJECTION) — 408

$F$ (EXHAUST FLOW RATE, HC CONCENTRATION AND $O_2$ CONCENTRATION) — 409

COMPARE E, F ? — 410

F>E

F<E

F=E

CALCULATE POST-INJECTION AMOUNT COMMAND VALUE INCREMENT $k(i) = k(i) \times k3$ — 411

CALCULATE POST-INJECTION AMOUNT COMMAND VALUE DECREMENT $k(i) = k(i) \times k4$ — 412

(D)

CORRECT POST-INJECTION AMOUNT COMMAND VALUE BY $k(i)$ — 413

OUTPUT PILOT, MAIN, POST-INJECTION COMMANDS — 414

END

FIG. 17A  CYL. #1

c 10    a  b    c 11    c 12

COMP. EXP. COMP. EXP. COMP. EXP. COMP. EXP. COMP. EXP. COMP. EXP. ( CRANK
TDC  TDC  TDC  TDC  TDC  TDC  TDC  TDC  TDC  TDC  TDC  TDC   ANGLE )

FIG. 17B  CYL. #2

a  b  c20    c21    c22

FIG. 17C  CYL. #3

a  b  c30    c31    c32

FIG. 17D  CYL. #4

a  b  c40    c41    c42

FIG. 17E  O₂ SENSOR OUTPUT

OXYGEN EXHAUST CONCENTRATION D W/O POST-INJECTION

F   E

c10  c20  c30  c40  c11  c21  c31  c41  c12  c22  c32  c42

PREDETERMINED O₂ CONCENTRATION
FROM POST-INJECTION COMMAND

# FIG. 18A

START

READ SENSOR OUTPUTS ⎯ 501

CALCULATE PILOT INJECTION TIMING
+ AMOUNT, MAIN INJECTION TIMING
+ AMOUNT ⎯ 502

ACCUMULATE PREDETERMINED
POST-INJECTION AMOUNTS ⎯ 503

PREDETERMINED
PERIOD ELAPSED SINCE LAST
POST-INJECTION ? ⎯ 504

NO

YES

SET POST-INJECTION AMOUNT
COMMAND VALUE TO
ACCUMULATED AMOUNT ⎯ 505

506

SET POST-INJECTION
COMMAND VALUE TO ZERO

SET ACCUMULATED
AMOUNT TO ZERO ⎯ 507

F

E

40

# FIG. 18B

E

CALCULATE G (DIFFERENCE BETWEEN AVERAGE, MAXIMUM O₂ SENSOR VALUES) —508

CALCULATE H (AVERAGE POST-INJECTION AMOUNT COMMAND VALUES) —509

510

H>G        COMPARE G,H ?        H<G

G=H

511

CALCULATE POST-INJECTION AMOUNT COMMAND VALUE INCREMENT
$k = k \times k5$

512

CALCULATE POST-INJECTION AMOUNT COMMAND VALUE DECREMENT
$k = k \times k6$

F

CORRECT POST-INJECTION AMOUNT COMMAND VALUE BY $k$ —513

OUTPUT PILOT, MAIN, POST-INJECTION COMMANDS —514

E N D

FIG. 19A  CYL. #1

FIG. 19B  CYL. #2

FIG. 19C  CYL. #3

FIG. 19D  CYL. #4

FIG. 19E  O₂ SENSOR OUTPUT

EP 0 844 380 B1

# FIG. 20A

START

READ SENSOR OUTPUTS — 601

CALCULATE PILOT INJECTION TIMING + AMOUNT, MAIN INJECTION TIMING + AMOUNT — 602

603
RESET POST-INJECTION CORRECTION FACTOR ? — NO

YES

READ EXHAUST GAS TEMPERATURE SENSOR OUTPUT — 604

SET POST-INJECTION COMMAND TIMING VALUE — 605

CALCULATE EXHAUST GAS TEMPERATURE RISER R — 606

607
PREDETERMINED PERIOD ELAPSED SINCE POST-INJECTION TIMING VALUE SET ? — NO

YES

G

H

# FIG. 20B

( G )

READ EXHAUST GAS TEMPERATURE SENSOR OUTPUT ⎯ 608

CALCULATE DIFFERENCE IN SENSOR READINGS ⎯ 609

RETURN POST-INJECTION TIMING COMMAND VALUE TO ORIGINAL STATE ⎯ 610

611

R > S     COMPARE CALCULATED EXHAUST GAS TEMPERATURE RISE R WITH ACTUAL DIFFERENCE S ?     R < S

R = S

612

CALCULATE POST-INJECTION AMOUNT COMMAND VALUE INCREMENT $k(i) = k(i) \times k7$

613

CALCULATE POST-INJECTION AMOUNT COMMAND VALUE DECREMENT $k(i) = k(i) \times k8$

( H )

CORRECT POST-INJECTION AMOUNT COMMAND VALUE BY $k(i)$ ⎯ 614

OUTPUT PILOT, MAIN, POST-INJECTION COMMANDS ⎯ 615

E N D

FIG. 21A　CYL. #1

c10　a　b　c11　c12

COMP. | EXP. | COMP. | EXP. | COMP. | EXP. | COMP. | EXP. | COMP. | EXP. | COMP. | EXP. | (CRANK
TDC | TDC | TDC | TDC | TDC | TDC | TDC | TDC | TDC | TDC | TDC | TDC | ANGLE)

FIG. 21B　CYL. #2

a　b　c20　c21　c22

FIG. 21C　CYL. #3

a　b　c30　c31　c32

FIG. 21D　CYL. #4

a　b　c40　c41　c42

FIG. 21E

EXHAUST GAS
TEMPERATURE
SENSOR OUTPUT

EP 0 844 380 B1